# EUROPEAN PATENT APPLICATION

(11) **EP 4 615 016 A1**
(43) Date of publication of application: **10.09.2025**
(21) Application number: 22964213.7
(22) Date of filing: 25.11.2022
(51) Int. Cl.: H04W 4/40, H04L 1/18

(54) **SIDELINK RADIO LINK FAILURE PROCESSING METHODS AND APPARATUS**

(30) Priority: 01.11.2022 WO PCT/CN2022/129106
(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/134509
(87) International publication number: WO 2024/092917

(57) **Abstract**

The present disclosure relates to the technical field of communications. Provided are sidelink radio link failure processing methods and apparatus. According to the sidelink radio link failure processing methods and apparatus provided in the present disclosure, a terminal device can analyze whether failure to detect PSFCH feedback is affected by an LBT failure, and does not update the current value of a detection variable when determining the failure to detect PSFCH feedback is related to the LBT failure, or otherwise allows the detection variable to be updated. The present disclosure can mitigate sidelink radio link failures caused by the effects of LBT, thereby ensuring the communication quality.

## Description

### FIELD

The present disclosure relates to the field of communication technologies, in particular to a processing method and a processing apparatus for sidelink radio link failure.

### BACKGROUND

In order to support direct communication between a terminal (user equipment, UE) and a terminal (e.g., UE), a sidelink (SL) communication mode is introduced. The UE needs to perform listen before talk (LBT) when transmitting sidelink data on an unlicensed spectrum. Due to the influence of LBT, the transmitting UE may continuously fail to detect a hybrid automatic repeat request (HARQ) feedback, which will trigger a sidelink radio link failure (RLF). However, frequent triggering of the sidelink RLF will easily affect the communication quality.

### SUMMARY

The present disclosure provides a processing method and a processing apparatus for a sidelink radio link failure, which may solve the problem of continuously failing to detect the PSFCH feedback due to the influence of LBT in a sidelink-U scenario, and thus frequently triggering the sidelink radio link failure, which affects the communication quality.

Embodiments of a first aspect of the present disclosure provides a processing method for a sidelink radio link failure, which is performed by a terminal and includes:
detecting a physical sidelink feedback channel (PSFCH) feedback on all PSFCH resources associated with a physical sidelink shared channel (PSSCH), in which the PSSCH is associated with a unicast connection, and the PSSCH is associated with more than one PSFCH resource; and
determining that no PSFCH feedback is detected on all the PSFCH resources, and updating a detection variable, in which the detection variable is associated with the unicast connection and configured to count a numeric count of consecutive discontinuous transmissions (DTXs) of the unicast connection.

In some embodiments of the present disclosure, determining that no PSFCH feedback is detected on all the PSFCH resources and updating the detection variable includes:
determining that no PSFCH feedback is detected on all the PSFCH resources, and updating the detection variable according to at least one measurement result; or
determining that no PSFCH feedback is detected on all the PSFCH resources, and directly updating the detection variable.

In some embodiments of the present disclosure, updating the detection variable according to the at least one measurement result includes:
determining that the at least one measurement result is greater than or equal to a respective threshold value, and keeping a current value of the detection variable unchanged.

In some embodiments of the present disclosure, updating the detection variable according to the at least one measurement result includes:
determining that the at least one measurement result is less than or equal to a respective threshold value, and adding 1 to the detection variable.

In some embodiments of the present disclosure, the method further includes:
determining the respective threshold value corresponding to the at least one measurement result according to configuration information.

In some embodiments of the present disclosure, the method further includes:
receiving a dedicated radio resource control (RRC) signaling transmitted by a network device, in which the dedicated RRC signaling is configured to configure the configuration information; or
receiving a system information block (SIB) signaling transmitted by a network device, in which the SIB signaling is configured to configure the configuration information; or
determining the configuration information according to pre-configuration.

In some embodiments of the present disclosure, the at least one measurement result includes at least one of a received signal strength indication (RSSI) measurement result, a first channel occupancy (CO) measurement result, or a second channel busy ratio (CBR) measurement result, in which a CO is a channel occupancy of an unlicensed spectrum and a CBR is a channel busy ratio of a sidelink.

In some embodiments of the present disclosure, directly updating the detection variable includes:
directly adding 1 to the detection variable.

Embodiments of a second aspect of the present disclosure provide a processing method for a sidelink radio link failure, which is performed by a terminal and includes:
detecting a PSFCH feedback on each PSFCH resource associated with a PSSCH, in which the PSSCH is associated with a unicast connection, and the PSSCH is associated with more than one PSFCH resource; and
updating a detection variable for each PSFCH resource where no PSFCH feedback is detected, in which the detection variable is associated with the unicast connection and configured to count a numeric count of consecutive DTXs of the unicast connection.

In some embodiments of the present disclosure, updating the detection variable for each PSFCH resource where no PSFCH feedback is detected includes:
updating the detection variable for each PSFCH resource where no PSFCH feedback is detected according to at least one measurement result; or
directly updating the detection variable for each PSFCH resource where no PSFCH feedback is detected.

In some embodiments of the present disclosure, updating the detection variable according to the at least one measurement result includes:
determining that the at least one measurement result is greater than or equal to a respective threshold value, and keeping a current value of the detection variable unchanged.

In some embodiments of the present disclosure, updating the detection variable according to the at least one measurement result includes:
determining that the at least one measurement result is less than or equal to a respective threshold value, and adding 1 to the detection variable.

In some embodiments of the present disclosure, the method further includes:
determining the respective threshold value corresponding to the at least one measurement result according to configuration information.

In some embodiments of the present disclosure, the method further includes:
receiving a dedicated RRC signaling transmitted by a network device, in which the dedicated RRC signaling is configured to configure the configuration information; or
receiving a SIB signaling transmitted by a network device, in which the SIB signaling is configured to configure the configuration information; or
determining the configuration information according to pre-configuration.

In some embodiments of the present disclosure, the at least one measurement result includes at least one of a RSSI measurement result, a first CO measurement result, or a second CBR measurement result, in which a CO is a channel occupancy of an unlicensed spectrum and a CBR is a channel busy ratio of a sidelink.

In some embodiments of the present disclosure, directly updating the detection variable includes:
directly adding 1 to the detection variable.

Embodiments of a third aspect of the present disclosure provide a processing method for a sidelink radio link failure, which is performed by a terminal and includes:
detecting a PSFCH feedback on only one PSFCH resource associated with a PSSCH, in which the PSSCH is associated with a unicast connection; and
determining that no PSFCH feedback is detected on the one PSFCH resource, and updating a detection variable, in which the detection variable is associated with the unicast connection and configured to count a numeric count of consecutive DTXs of the unicast connection.

In some embodiments of the present disclosure, determining that no PSFCH feedback is detected on the one PSFCH resource and updating the detection variable includes:
determining that no PSFCH feedback is detected on the one PSFCH resource, and updating the detection variable according to at least one measurement result; or
determining that no PSFCH feedback is detected on the one PSFCH resource, and directly updating the detection variable.

In some embodiments of the present disclosure, updating the detection variable according to the at least one measurement result includes:
determining that the at least one measurement result is greater than or equal to a respective threshold value, and keeping a current value of the detection variable unchanged.

In some embodiments of the present disclosure, updating the detection variable according to the at least one measurement result includes:
determining that the at least one measurement result is less than or equal to a respective threshold value, and adding 1 to the detection variable.

In some embodiments of the present disclosure, the method further includes:
determining the respective threshold value corresponding to the at least one measurement result according to configuration information.

In some embodiments of the present disclosure, the method further includes:
receiving a dedicated RRC signaling transmitted by a network device, in which the dedicated RRC signaling is configured to configure the configuration information; or
receiving a SIB signaling transmitted by a network device, in which the SIB signaling is configured to configure the configuration information; or
determining the configuration information according to pre-configuration.

In some embodiments of the present disclosure, the at least one measurement result includes at least one of a RSSI measurement result, a first CO measurement result, or a second CBR measurement result, in which a CO is a channel occupancy of an unlicensed spectrum and a CBR is a channel busy ratio of a sidelink.

In some embodiments of the present disclosure, directly updating the detection variable includes:
directly adding 1 to the detection variable.

Embodiments of a fourth aspect of the present disclosure provide a processing apparatus for a sidelink radio link failure, which is applied to a terminal and includes a processing module configured to:
detect a PSFCH feedback on all PSFCH resources associated with a PSSCH, in which the PSSCH is associated with a unicast connection, and the PSSCH is associated with more than one PSFCH resource; and
determine that no PSFCH feedback is detected on all the PSFCH resources, and update a detection variable, in which the detection variable is associated with the unicast connection and configured to count a numeric count of consecutive DTXs of the unicast connection.

Embodiments of a fifth aspect of the present disclosure provide a processing apparatus for a sidelink radio link failure, which is applied to a terminal and includes a processing module configured to:
detect a PSFCH feedback on each PSFCH resource associated with a PSSCH, in which the PSSCH is associated with a unicast connection, and the PSSCH is associated with more than one PSFCH resource; and
update a detection variable for each PSFCH resource where no PSFCH feedback is detected, in which the detection variable is associated with the unicast connection and configured to count a numeric count of consecutive DTXs of the unicast connection.

Embodiments of a sixth aspect of the present disclosure provide a processing apparatus for a sidelink radio link failure, which is applied to a terminal and includes a processing module configured to:
detect a PSFCH feedback on only one PSFCH resource associated with a PSSCH, in which the PSSCH is associated with a unicast connection; and
determine that no PSFCH feedback is detected on the one PSFCH resource, and update a detection variable, in which the detection variable is associated with the unicast connection and configured to count a numeric count of consecutive DTXs of the unicast connection.

Embodiments of a seventh aspect of the present disclosure provide a communication device including a transceiver, a memory and a processor. The processor is connected with the transceiver and the memory, respectively, is configured to control the transceiver to receive and transmit wireless signals by executing computer executable instructions on the memory, and to realize the method according to the first aspect embodiments, the second aspect embodiments or the third aspect embodiments of the present disclosure.

Embodiments of an eighth aspect of the present disclosure provide a computer storage medium, storing computer executable instructions which, when executed by a processor, are configured to realize the method according to the first aspect embodiments, the second aspect embodiments or the third aspect embodiments of the present disclosure.

In the processing methods and the processing apparatuses for the sidelink radio link failure according to the embodiments of the present disclosure, the PSFCH feedback may be detected on all the PSFCH resources associated with the PSSCH, and the detection variable may be updated when it is determined that no PSFCH feedback is detected on all the PSFCH resources; or the PSFCH feedback may be detected on each PSFCH resource associated with the PSSCH, and the detection variable may be updated for each PSFCH resource where no PSFCH feedback is detected; or the PSFCH feedback may be detected on the only one PSFCH resource associated with the PSSCH, and the detection variable may be updated when it is determined that no PSFCH feedback is detected on the one PSFCH resource. Through the technical scheme in the present disclosure, the update of the consecutive DTX detection variable may be distinguished from the LBT failure in various ways, thus effectively alleviating the problem of triggering the sidelink radio link failure due to the LBT failure.

Additional aspects and advantages of the present disclosure will be set forth in part in the description which follow, and in part will be obvious from the description which follows, or may be learned by practice of the present disclosure.

### BRIEF DESCRIPTION OF THE DRAWINGS

The above and/or additional aspects and advantages of the present disclosure will be apparent and easily understood from the following description of embodiments taken with reference to the accompanying drawings.
Fig. 1 is a flow chart of a processing method for a sidelink radio link failure according to an embodiment of the present disclosure.
Fig. 2 is a flow chart of a processing method for a sidelink radio link failure according to an embodiment of the present disclosure.
Fig. 3 is a flow chart of a processing method for a sidelink radio link failure according to an embodiment of the present disclosure.
Fig. 4 is a flow chart of a processing method for a sidelink radio link failure according to an embodiment of the present disclosure.
Fig. 5 is a flow chart of a processing method for a sidelink radio link failure according to an embodiment of the present disclosure.
Fig. 6 is a flow chart of a processing method for a sidelink radio link failure according to an embodiment of the present disclosure.
Fig. 7 is a flow chart of a processing method for a sidelink radio link failure according to an embodiment of the present disclosure.
Fig. 8 is a flow chart of a processing method for a sidelink radio link failure according to an embodiment of the present disclosure.
Fig. 9 is a flow chart of a processing method for a sidelink radio link failure according to an embodiment of the present disclosure.
Fig. 10 is a block diagram of a processing apparatus for a sidelink radio link failure according to an embodiment of the present disclosure.
Fig. 11 is a block diagram of a processing apparatus for a sidelink radio link failure according to an embodiment of the present disclosure.
Fig. 12 is a block diagram of a processing apparatus for a sidelink radio link failure according to an embodiment of the present disclosure.
Fig. 13 is a schematic diagram of a communication device according to an embodiment of the present disclosure.
Fig. 14 is a schematic diagram of a chip according to an embodiment of the present disclosure.

### DETAILED DESCRIPTION

Hereinafter, embodiments of the present disclosure will be described in detail, examples of which are illustrated in the accompanying drawings, in which the same or similar reference numerals indicate the same or similar elements or elements having the same or similar functions throughout the specification. The embodiments described below with reference to the accompanying drawings are illustrative and are intended to explain the present disclosure, but should not be construed as limiting the present disclosure.

Hereinafter, embodiments of the present disclosure will be described in detail, examples of which are illustrated in the accompanying drawings, in which the same or similar reference numerals indicate the same or similar elements or elements having the same or similar functions throughout the specification. The embodiments described below with reference to the accompanying drawings are illustrative and are intended to explain the present disclosure, but should not be construed as limiting the present disclosure. It should be noted that the embodiments of the present disclosure and the features in the embodiments may be combined with each other without conflict.

The terms used in the embodiments of the present disclosure are only for the purpose of describing specific embodiments, and are not intended to limit the embodiments of the present disclosure. The singular forms "a" and "the" used in the embodiments of the present disclosure and the appended claims are also intended to include the plural forms, unless the context clearly indicates otherwise. It should also be understood that the term "and/or" as used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be called the second information, and similarly, the second information may also be called the first information. Depending on the context, the word "if" as used herein may be interpreted as "when" or "while" or "in response to determining".

In order to facilitate understanding, the terms involved in the embodiments are first introduced.

### 1. Sidelink (SL)

The communication interface between a terminal (user equipment, UE) and a terminal (e.g., UE) is called PC-5 interface. On the PC-5 interface, the link for transmitting data between the terminal and the terminal is called the sidelink. According to the corresponding relationship between the transmitting UE and the receiving UE, three transmission modes may be supported on the sidelink, including unicast, multicast and broadcast. The transmitting UE transmits sidelink control information (SCI) on a physical sidelink control channel (PSCCH) and transmits second-stage SCI on a physical sidelink shared channel (PSSCH), which carries the locations of resources for transmitting data, as well as source and target identifiers, etc. For data packets with hybrid automatic repeat request (HARQ) feedback enabled, the receiving UE performs HARQ-acknowledgment (ACK) to the PSSCH on a physical sidelink feedback channel (PSFCH).

### 2. Listen before talk (LBT)

The LBT is a technology to avoid channel access conflict. Different terminals compete for shared unlicensed (or license-exempt) spectrum resources through LBT operation. Release 18 (R18) of communication protocol supports sidelink communication to use an unlicensed spectrum, and the terminal also needs to perform LBT when transmitting sidelink data on the unlicensed spectrum. The continuous LBT mechanism is also suitable for sidelink communication on the unlicensed spectrum.

### 3. Radio link failure (RLF)

The RLF is a communication failure of a call channel. When a voice (or data) quality of a mobile station deteriorates to an unacceptable level during communication and cannot be improved by radio frequency power or handover (for example, the mobile station leaves the coverage area), the mobile station forcibly breaks the link or initiates call re-establishment. Since forcibly breaking the link actually introduces a "dropped call" process, only when it is certain that the communication quality is really unacceptable may the mobile station consider it as a radio link failure.

### 4. Physical sidelink control channel (PSCCH).

The PSCCH is a physical sidelink control channel, which contains a control signaling of the sidelink, and this physical channel indicates PSSCH channel resources and transmission parameters.

### 5. Physical sidelink shared channel (PSSCH).

The PSSCH is a physical sidelink shared channel, which carries the data of sidelink communication.

### 6. Physical sidelink feedback channel (PSFCH).

The PSFCH is used to carry HARQ feedback information on the sidelink.

In order to support the direct communication between the terminal (e.g., the user equipment, UE) and the terminal (e.g., the UE), the sidelink (SL) communication mode is introduced. The interface between the UE and the UE is the PC-5 interface. According to the corresponding relationship between the transmitting UE and the receiving UE, three transmission modes, namely unicast, multicast and broadcast, are supported on the sidelink. The transmitting UE sends the sidelink control information (SCI) on the physical sidelink control channel (PSCCH) and sends the second-stage SCI on the physical sidelink shared channel (PSSCH), which carries the locations of resources for transmitting data, as well as source and target identifiers, etc. For data packets with hybrid automatic repeat request (HARQ) feedback enabled, the receiving UE performs HARQ-ACK to the PSSCH on the physical sidelink feedback channel (PSFCH).

At present, for one unicast connection, when the UE fails to receive HARQ feedback (PSFCH feedback) on the PSFCH resources for a certain number of consecutive times, the UE considers that the unicast connection has an SL RLF based on the HARQ feedback and informs a radio resource control (RRC). The RRC controls detection of the SL RLF based on the HARQ feedback by configuring the maximum number sl-maxNumConsecutiveDTX of consecutive discontinuous transmissions (DTXs) for each UE. At the same time, the UE maintains a variable numConsecutiveDTX for each unicast connection, which is used to count a numeric count of consecutive DTXs for this unicast connection. When the unicast connection is established or the sl-maxNumConsecutiveDTX is reconfigured/initially configured, the UE initializes the variable numConsecutiveDTX corresponding to the unicast connection to 0. The UE counts whether the DTX exists for each PSFCH receiving opportunity associated with each PSSCH transmission of this unicast connection. When no HARQ feedback is received at the PSFCH opportunity, the UE adds 1 to the variable numConsecutiveDTX corresponding to this unicast connection. When the variable numConsecutiveDTX corresponding to the unicast connection reaches the maximum value sl-maxNumConsecutiveDTX, the UE considers that the unicast connection has the SL RLF based on the HARQ feedback and informs the RRC layer. When the UE receives the HARQ feedback at the PSFCH opportunity, the UE initializes the variable numConsecutiveDTX corresponding to the unicast connection to 0. At present, the sl-maxNumConsecutiveDTX supported in the RRC protocol has a minimum configuration of 1 and a maximum configuration of 32.

R18 supports the use of the unlicensed spectrum for the sidelink communication, and the LBT is also needed for the UE to transmit the sidelink data on the unlicensed spectrum. When the receiving UE fails to transmit the HARQ feedback on the PSFCH due to the LBT failure, the transmitting UE may consider that the DTX has occurred if it fails to detect the HARQ feedback on the PSFCH. When the value of the sl-maxNumConsecutiveDTX configuration is very small, the transmitting UE fails to detect the HARQ feedback continuously due to the influence of LBT, which will trigger the SL RLF. However, frequent triggering of the SL RLF will affect the communication quality.

Therefore, this embodiment proposes a processing method and a processing apparatus for a sidelink radio link failure, which may avoid the problem of continuously failing to detect the PSFCH feedback due to the influence of LBT in a sidelink-U scenario, and thus frequently triggering the sidelink radio link failure, which affects the communication quality. Therefore, it is necessary to determine whether the failure to detect the PSFCH feedback is related to the LBT failure. When it is determined that the LBT failure is the cause of the failure to detect the PSFCH feedback, the current value of the detection variable will not be added by 1.

It may be understood that the scheme provided by the present disclosure may be applied to a terminal. Specifically, the terminal may be a communication device such as a mobile phone, a notebook computer, a tablet computer, a POS machine, a vehicle-mounted computer, etc., and is not limited in the present disclosure.

Next, the processing method and the processing apparatus for the sidelink radio link failure provided by the present disclosure will be introduced in detail with the accompanying drawings.

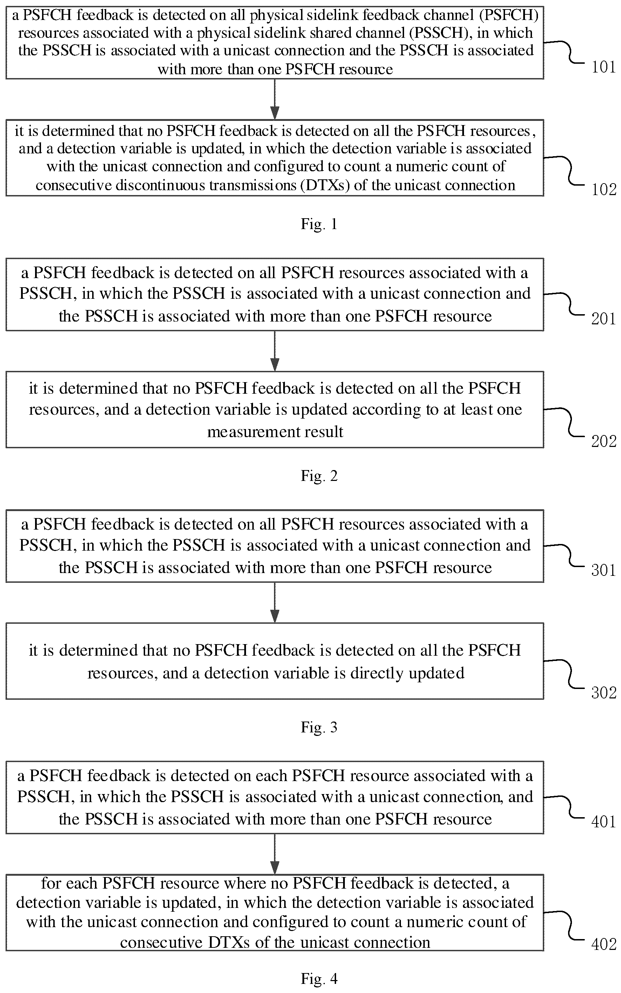

Fig. 1 shows a flow chart of a processing method for a sidelink radio link failure according to an embodiment of the present disclosure. The method may be performed by a terminal. As shown in Fig. 1, the method may include the following steps.

In step 101, a PSFCH feedback is detected on all physical sidelink feedback channel (PSFCH) resources associated with a physical sidelink shared channel (PSSCH), in which the PSSCH is associated with a unicast connection and the PSSCH is associated with more than one PSFCH resource.

In a specific application scenario, the PSSCH may be associated with at least one PSFCH resource at the same time. For the embodiments of the present disclosure, when the PSSCH is associated with more than one PSFCH resource, the terminal may detect whether the PSFCH feedback exists at opportunities of all the PSFCH resources associated with the PSSCH. It may be understood that the PSSCH may also be associated with only one PSFCH resource. When the PSSCH is associated with only one PSFCH resource, the terminal may detect whether the PSFCH feedback exists at an opportunity of the associated PSFCH resource. The opportunity includes a frequency domain resource and/or a time domain resource corresponding to the PSFCH resource.

In step 102, it is determined that no PSFCH feedback is detected on all the PSFCH resources, and a detection variable is updated, in which the detection variable is associated with the unicast connection and configured to count a numeric count of consecutive discontinuous transmissions (DTXs) of the unicast connection.

The detection variable is a consecutive DTX detection variable (numConsecutiveDTX) maintained by the terminal for each unicast connection, which is used to count the numeric count of consecutive DTXs for this unicast connection. When the numeric count of consecutive DTXs reaches a configuration maximum, a sidelink radio link failure (SL RLF) will be triggered. On the contrary, when the numeric count of continuous DTXs is less than the configuration maximum, in a case that the HARQ feedback on the PSFCH is received, the DTX detection variable will be reset.

For the embodiments of the present disclosure, as a possible implementation, it may be judged whether the PSFCH feedback is detected on all the PSFCH resources associated with the PSSCH, and when it is determined that no PSFCH feedback is detected on all the PSFCH resources, the detection variable is updated. Specifically, when it is judged that the correlation between the failure to detect the PSFCH feedback on all the PSFCH resources and the LBT failure is small, a current value of the detection variable may be increased by 1; and when it is judged that the correlation between the failure to detect the PSFCH feedback on all the PSFCH resources and the LBT failure is large, the current value of the detection variable may be reset to 0, or the current value of the detection variable may be kept unchanged. For details, reference may be made to relevant descriptions in steps 201 to 202 and steps 301 to 302 of the embodiments of the present disclosure.

To sum up, in the processing method for the sidelink radio link failure according to the embodiments of the present disclosure, the PSFCH feedback may be detected on all the PSFCH resources associated with the PSSCH, and the detection variable may be updated when it is determined that no PSFCH feedback is detected on all the PSFCH resources. Through the technical scheme in the present disclosure, the update of the consecutive DTX detection variable may be distinguished from the LBT failure, thus effectively alleviating the problem of triggering the sidelink radio link failure due to the LBT failure.

Fig. 2 shows a processing method for a sidelink radio link failure according to an embodiment of the present disclosure, which is performed by a terminal. Based on the embodiment shown in Fig. 1, as shown in Fig. 2, the method may include the following steps.

In step 201, a PSFCH feedback is detected on all PSFCH resources associated with a PSSCH, in which the PSSCH is associated with a unicast connection and the PSSCH is associated with more than one PSFCH resource.

For this embodiment of the present disclosure, reference may be made to the relevant description in step 101 of the embodiments of the present disclosure for details, which will not be repeated here.

In step 202, it is determined that no PSFCH feedback is detected on all the PSFCH resources, and a detection variable is updated according to at least one measurement result.

In an optional embodiment, the at least one measurement result may include, for example, at least one of a received signal strength indicator (RSSI) measurement result, a first channel occupancy (CO) measurement result, and a second channel busy ratio (CBR) measurement result. A CO is a channel occupancy of an unlicensed spectrum, and a CBR is a channel busy ratio of a sidelink. It should be noted that the at least one measurement result is not limited to the above measurement results, and may also be determined by detecting other indicators of signal strength of peripheral terminals or other indicators of channel occupancy, which is not listed exhaustively here.

In an optional embodiment, when determining whether the failure to detect the PSFCH feedback on all the PSFCH resources is related to the LBT failure, for example, the determination may be made according to at least one of the RSSI measurement result, the CO measurement result and the CBR measurement result. It should be noted that when determining whether the failure to detect the PSFCH feedback on all the PSFCH resources is related to the LBT failure, the determination is not limited to the above measurement results, and may also be made by detecting other indicators of signal strength of peripheral terminals or other indicators of channel occupancy, which is not listed exhaustively here.

For the embodiments of the present disclosure, the terminal may measure the RSSI according to configuration information transmitted by the network side for instructing to perform the RSSI measurement, and obtain the RSSI measurement result. In addition, the configuration information may be determined through network side configuration or pre-configuration, and a first threshold value may be determined according to the configuration information. The first threshold value is used to be compared with the RSSI measurement result to determine whether the LBT failure is the cause of the failure to detect the PSFCH feedback on all the PSFCH resources. When it is determined that the failure to detect the PSFCH feedback on all the PSFCH resources is related to the LBT failure, the current value of the consecutive DTX detection variable corresponding to the unicast connection is not updated. Otherwise, the consecutive DTX detection variable corresponding to the unicast connection is allowed to be updated. When the configuration information is determined by the network side configuration, a dedicated radio resource control (RRC) signaling transmitted by a network device is received, and the dedicated RRC signaling is configured to configure the configuration information; or a system information block (SIB) signaling transmitted by the network device is received, and the SIB signaling is configured to configure the configuration information. Specifically, the first threshold value may be configured or preconfigured by the network device. The terminal in the network connection coverage may obtain the first threshold through the dedicated RRC signaling or the SIB signaling, and the terminal outside the network connection coverage, that is, the terminal without network connection, may obtain the first threshold through the pre-configuration.

For the embodiments of the present disclosure, the terminal may measure the RSSI and obtain the RSSI measurement result according to the configuration information transmitted by the network side for instructing to perform the RSSI measurement, and/or measure the CO and obtain the CO measurement result according to the configuration information transmitted by the network side for instructing to perform the CO measurement, and/or measure the CBR and obtain the CBR measurement result according to the configuration information transmitted by the network side for instructing to perform the CBR measurement. In addition, the terminal may also determine the configuration information through the network side configuration or pre-configuration, and determine the first threshold value and/or the second threshold value and/or the third threshold value according to the configuration information. The first threshold value is used to be compared with the RSSI measurement result to determine whether the LBT failure is the cause of the failure to detect the PSFCH feedback on all the PSFCH resources. The second threshold value is used to be compared with the CO measurement result to determine whether the LBT failure is the cause of the failure to detect the PSFCH feedback on all the PSFCH resources. The third threshold value is used to be compared with the CBR measurement result to determine whether the LBT failure is the cause of the failure to detect the PSFCH feedback on all the PSFCH resources. When it is determined that the failure to detect the PSFCH feedback on all the PSFCH resources is related to the LBT failure, the current value of the consecutive DTX detection variable corresponding to the unicast connection is not updated. Otherwise, the consecutive DTX detection variable corresponding to the unicast connection is allowed to be updated.

When the configuration information is determined by the network side configuration, the dedicated RRC signaling transmitted by the network device may be received, and the dedicated RRC signaling is configured to configure the configuration information; or the SIB signaling transmitted by the network device may be received, and the SIB signaling is used to configure the configuration information. Specifically, the first threshold value and/or the second threshold value and/or the third threshold value may be configured or preconfigured by the network device. As a possible implementation, the terminal in the network connection coverage may obtain the first threshold value and/or the second threshold value and/or the third threshold value through the dedicated RRC signaling or the SIB signaling transmitted by the network side. As a possible implementation, the terminal out of the network connection coverage, that is, the terminal without network connection, may obtain the first threshold value and/or the second threshold value and/or the third threshold value through the pre-configuration.

For the embodiments of the present disclosure, as an implementation, the terminal may independently determine whether the failure to detect the PSFCH feedback on all the PSFCH resources is due to the LBT failure according to any one of the RSSI measurement result, the CO measurement result and the CBR measurement result. As an implementation, in order to avoid misjudgment and fully improve the accuracy of judgment when it is determined whether the LBT failure is related to the failure to detect the PSFCH feedback on all the PSFCH resources, it may be comprehensively determined whether the failure to detect the PSFCH feedback on all the PSFCH resources is due to the LBT failure by using any two or three of the RSSI measurement result, the CO measurement result and the CBR measurement result. Specifically, when it is determined that at least one of the RSSI measurement result, the CO measurement result and the CBR measurement result is greater than or equal to its respective threshold value, it indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. On the contrary, when the terminal judges that the failure to detect the PSFCH feedback on all the PSFCH resources is not related to the LBT failure according to the fact that at least one of the RSSI measurement result, the CO measurement result and the CBR measurement result is less than or equal to the respective threshold value, it may add 1 to the consecutive DTX detection variable corresponding to the unicast connection.

In an optional embodiment, the terminal may use the latest RSSI measurement result and/or the latest CO measurement result and/or the latest CBR measurement result as the comparison basis; or the terminal may re-measure the RSSI and/or CO and/or CBR when it is determined that no PSFCH feedback is detected on all the PSFCH resources, and use the re-measured RSSI and/or CO and/or CBR as the comparison basis; or the terminal currently has an available RSSI measurement result and/or CO measurement result and/or CBR measurement result, and the current RSSI and/or CO and/or CBR are used as the comparison basis. There may be other implementations, which are not limited in this embodiment.

In an optional embodiment, when no PSFCH feedback is detected on all the PSFCH resources associated with the PSSCH, and it is determined whether it is necessary to update the detection variable by comparing the measured RSSI with the first threshold value. As a possible implementation, the terminal determines that the RSSI measurement result is greater than or equal to the first threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the RSSI measurement result is less than or equal to the first threshold value, which indicates that the probability of the LBT failure is small at this time, so that it is necessary to add 1 to the consecutive DTX detection variable corresponding to the unicast connection.

In an optional embodiment, when no PSFCH feedback is detected on all the PSFCH resources associated with the PSSCH, and it is determined whether it is necessary to update the detection variable by comparing the measured CO measurement result with the second threshold value. As a possible implementation, the terminal determines that the CO measurement result is greater than or equal to the second threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CO measurement result is less than or equal to the second threshold value, which indicates that the probability of the LBT failure is small at this time, so that it is necessary to add 1 to the consecutive DTX detection variable corresponding to the unicast connection.

In an optional embodiment, when no PSFCH feedback is detected on all the PSFCH resources associated with the PSSCH, and it is determined whether it is necessary to update the detection variable by comparing the measured CBR measurement result with the third threshold value. As a possible implementation, the terminal determines that the CBR measurement result is greater than or equal to the third threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CBR measurement result is less than or equal to the third threshold value, which indicates that the probability of the LBT failure is small at this time, so that it is necessary to add 1 to the consecutive DTX detection variable corresponding to the unicast connection.

In an optional embodiment, two measurement results (such as the RSSI measurement result and the CO measurement result, or the RSSI measurement result and the CBR measurement result, or the CO measurement result and the CBR measurement result, etc.) may be used to comprehensively determine whether the failure to detect the PSFCH feedback on all the PSFCH resources is due to the LBT failure. When the two measurement results are respectively greater than or equal to their respective threshold values, that is, none of the two measurement results is less than or equal to its respective threshold value, it is judged that the probability of the LBT failure is high at this time, and it is further determined that the failure to detect the PSFCH feedback on all the PSFCH resources is due to the LBT failure. In an optional embodiment, three measurement results, namely the RSSI measurement result, the CO measurement result and the CBR measurement result, may be used to comprehensively determine whether the failure to detect the PSFCH feedback on all the PSFCH resources is due to the LBT failure. When it is determined that at least two of the RSSI measurement result, the CO measurement result and the CBR measurement result are respectively greater than or equal to their respective threshold values, that is, it is equivalent to determining that at most one (only one or none) of the RSSI measurement result, the CO measurement result and the CBR measurement result is less than or equal to its respective threshold value, it may be judged that the probability of the LBT failure is high at this time, and it is further determined that the failure to detect the PSFCH feedback on all the PSFCH resources is due to the LBT failure. As a possible implementation, when the terminal determines that the RSSI measurement result is greater than or equal to the first threshold value, and determines that the CO measurement result is greater than or equal to the second threshold value, it may be judged that the failure to detect the PSFCH feedback on all the PSFCH resources is related to the LBT failure. As a possible implementation, when the terminal determines that the RSSI measurement result is greater than or equal to the first threshold value, and determines that the CBR measurement result is greater than or equal to the third threshold value, it may be judged that the failure to detect the PSFCH feedback on all the PSFCH resources is related to the LBT failure. As a possible implementation, when the terminal determines that the CO measurement result is greater than or equal to the second threshold value, and determines that the CBR measurement result is greater than or equal to the third threshold value, it may be judged that the failure to detect the PSFCH feedback on all the PSFCH resources is related to the LBT failure. As a possible implementation, when the terminal determines that the RSSI measurement result is greater than or equal to the first threshold value, determines that the CO measurement result is greater than or equal to the second threshold value, and determines that the CBR measurement result is greater than or equal to the third threshold value, it may be judged that the failure to detect the PSFCH feedback on all the PSFCH resources is related to the LBT failure. When the terminal judges that the failure to detect the PSFCH feedback on all the PSFCH resources is related to the LBT failure, it does not add 1 to the consecutive DTX detection variable corresponding to the unicast connection, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0.

Similarly, in an optional embodiment, two measurement results (such as the RSSI and the CO measurement results, or the RSSI measurement result and the CBR measurement result, or the CO measurement result and the CBR measurement result, etc.) may be used to comprehensively determine whether the failure to detect the PSFCH feedback on all the PSFCH resources is due to the LBT failure. When the two measurement results are less than or equal to their respective threshold values, that is, none of the two measurement results is greater than or equal to its respective threshold value, it is judged that the probability of the LBT failure is small at this time, and it is further determined that the failure to detect the PSFCH feedback on all the PSFCH resources is not related to the LBT failure. In an optional embodiment, three measurement results, namely the RSSI measurement result, the CO measurement result and the CBR measurement result, may be used to comprehensively determine whether the failure to detect the PSFCH feedback on all the PSFCH resources is due to the LBT failure. When it is determined that at least two of the RSSI measurement result, the CO measurement result and the CBR measurement result are less than or equal to their respective threshold values, that is, it is equivalent to determining that at most one (only one or none) of the RSSI measurement result, the CO measurement result and the CBR measurement result is greater than or equal to its respective threshold value, it indicates that the probability of the LBT failure is small at this time, and it is judged that the failure to detect the PSFCH feedback on all the PSFCH resources is not related to the LBT failure. Specifically, as a possible implementation, when the terminal determines that the RSSI measurement result is less than or equal to the first threshold value, and determines that the CO measurement result is less than or equal to the second threshold value, it may be judged that the failure to detect the PSFCH feedback on all the PSFCH resources is not related to the LBT failure. As a possible implementation, when the terminal determines that the RSSI measurement result is less than or equal to the first threshold value, and determines that the CBR measurement result is less than or equal to the third threshold value, it may be judged that the failure to detect the PSFCH feedback on all the PSFCH resources is not related to the LBT failure. As a possible implementation, when the terminal determines that the CO measurement result is less than or equal to the second threshold value, and determines that the CBR measurement result is less than or equal to the third threshold value, it may be judged that the failure to detect the PSFCH feedback on all the PSFCH resources is not related to the LBT failure. As a possible implementation, when the terminal determines that the RSSI measurement result is less than or equal to the first threshold value, determines that the CO measurement result is less than or equal to the second threshold value, and determines that the CBR measurement result is less than or equal to the third threshold value, it may be judged that the failure to detect the PSFCH feedback on all the PSFCH resources is not related to the LBT failure. When the terminal judges that the failure to detect the PSFCH feedback on all the PSFCH resources is not related to the LBT failure, it adds 1 to the consecutive DTX detection variable corresponding to the unicast connection.

To sum up, according to the processing method for the sidelink radio link failure provided by the embodiments of the present disclosure, it is possible to detect the PSFCH feedback on all the PSFCH resources associated with the PSSCH, and when it is determined that no PSFCH feedback is detected on all the PSFCH resources, it is judged whether the failure to detect the PSFCH feedback on all the PSFCH resources is due to the LBT failure in combination with the at least one measurement result. The current value of the detection variable is not updated when it is determined that the failure to detect the PSFCH feedback on all the PSFCH resources is related to the LBT failure. Otherwise, the detection variable is allowed to be updated. Through the technical scheme in the present disclosure, the update of the consecutive DTX detection variable may be distinguished from the LBT failure, thus effectively alleviating the problem of triggering the sidelink radio link failure due to the LBT failure.

Fig. 3 shows a processing method for a sidelink radio link failure according to an embodiment of the present disclosure, which is performed by a terminal. Based on the embodiment shown in Fig. 1, as shown in Fig. 3, the method may include the following steps.

In step 301, a PSFCH feedback is detected on all PSFCH resources associated with a PSSCH, in which the PSSCH is associated with a unicast connection and the PSSCH is associated with more than one PSFCH resource.

For this embodiment of the present disclosure, reference may be made to the relevant description in step 101 of the embodiments of the present disclosure for details, which will not be repeated here.

In step 302, it is determined that no PSFCH feedback is detected on all the PSFCH resources, and a detection variable is directly updated.

In a specific application scenario, the UE does not consider the RSSI measurement result, the CO measurement result and the CBR measurement result. When one PSSCH is associated with multiple PSFCH resources, the UE detects whether the PSFCH feedback exists at opportunities of all the PSFCH resources associated with the PSSCH. When no PSFCH feedback is detected on all the PSFCH resources associated with the PSSCH, the UE adds 1 to a consecutive DTX variable corresponding to the unicast connection. When the PSFCH feedback is detected at the opportunity of any PSFCH resource associated with the PSSCH, the UE resets the consecutive DTX variable corresponding to the unicast connection to 0.

For example, in a case that N (N>1) PSFCH resources are configured for one PSSCH transmission, the one PSSCH transmission needs to perform N PSFCH feedbacks accordingly. In this case, as a possible implementation, when it is determined that all the N PSFCH feedbacks are unsuccessful, that is, no PSFCH feedback is detected at the opportunities of all the PSFCH resources associated with the PSSCH, the terminal may directly add 1 to the consecutive DTX detection variable corresponding to the unicast connection. On the contrary, when the PSFCH feedback is detected at the opportunity of any PSFCH resource associated with the PSSCH, the terminal may reset the consecutive DTX detection variable corresponding to the unicast connection to 0. As a possible implementation, when it is determined that there are consecutive M (M<N) times of failure to detect the PSFCH feedback among the N PSFCH feedbacks, the terminal may directly add 1 to the consecutive DTX detection variable corresponding to the unicast connection. The value of M may be determined according to the actual application scenario. As a possible implementation, when it is determined that there are discrete A (A<N) times of failure to detect the PSFCH feedback among the N PSFCH feedbacks, the terminal may directly add 1 to the consecutive DTX detection variable corresponding to the unicast connection. The values of M and A may be the same or different, and the specific values thereof may be set according to the actual application scenario.

To sum up, according to the processing method for the sidelink radio link failure provided by the embodiments of the present disclosure, the PSFCH feedback may be detected on all the PSFCH resources associated with the PSSCH, and when it is determined that no PSFCH feedback is detected on all the PSFCH resources, the detection variable may be directly updated. Through the technical scheme in the present disclosure, the update of the consecutive DTX detection variable may be distinguished from the LBT failure, thus effectively alleviating the problem of triggering the sidelink radio link failure due to the LBT failure.

Fig. 4 shows a flow chart of a processing method for a sidelink radio link failure according to an embodiment of the present disclosure. As shown in Fig. 4, the method is performed by a terminal, and may include the following steps.

In step 401, a PSFCH feedback is detected on each PSFCH resource associated with a PSSCH, in which the PSSCH is associated with a unicast connection, and the PSSCH is associated with more than one PSFCH resource.

In a specific application scenario, the PSSCH may be associated with at least one PSFCH resource at the same time. For the embodiments of the present disclosure, when the PSSCH is associated with more than one PSFCH resource, the terminal may detect whether the PSFCH feedback exists at an opportunity of each PSFCH resource associated with the PSSCH. The opportunity includes a frequency domain resource and/or a time domain resource corresponding to the PSFCH resource.

It should be noted that, for the embodiments of the present disclosure, when the PSFCH feedback is detected on each PSFCH resource associated with the PSSCH, the following cases may exist.

As a possible implementation, the PSFCH feedback may be detected on each PSFCH resource associated with the PSSCH, and finally, for each PSFCH resource where no PSFCH feedback is detected, the detection variable is updated. For example, five PSFCH resources are associated with the PSSCH, and when the PSFCH feedback is detected only on the third PSFCH resource, it is necessary to update the detection variables for the PSFCH resources (the first, second, fourth and fifth PSFCH resources), where no PSFCH feedback is detected, among the five PSFCH resources. Specifically, as a possible implementation, the measurement results may continue to be superimposed according to step 502 of the embodiments of the present disclosure, and the update of the detection variables of the first, second, fourth and fifth PSFCH resources may be judged, that is, it is judged whether the failure to detect the PSFCH feedback on the first, second, fourth and fifth PSFCH resources is due to the LBT failure in combination with the measurement results. When it is determined that the failure to detect the PSFCH feedback is related to the LBT failure, the current value of the detection variable is not updated. Otherwise, the detection variable is allowed to be updated. As a possible implementation, the detection variables of the first, second, fourth and fifth PSFCH resources may be updated directly according to step 602 of the embodiments of the present disclosure, that is, the consecutive DTX detection variable corresponding to the unicast connection is directly increased by 1.

As a possible implementation, a target PSFCH resource where the PSFCH feedback is detected for the first time may be determined in the one-by-one detection of multiple PSFCH resources associated with the PSSCH, and the detection variables need to be updated for the PSFCH resources (where no PSFCH feedback is detected) involved in detection before the target PSFCH resource. For example, five PSFCH resources are associated with the PSSCH, and when the PSFCH feedback is detected for the first time on the third PSFCH resource, it is necessary to further update the detection variables for the PSFCH resources (the first and second PSFCH resources) involved in detection before the target PSFCH resource. That is, no PSFCH feedback is detected on the first two PSFCH resources, the PSFCH feedback is detected only on the third PSFCH resource, and thus the fourth PSFCH resource and the fifth PSFCH resource do not need to be counted and detected, because after the PSFCH feedback is detected on the third PSFCH resource, the subsequent PSFCH resources will not be used by the UE to transmit the PSFCH feedback. Therefore, it is only counted up to the third time, that is, the detection variables of the first and second PSFCH resources need to be updated. Specifically, as a possible implementation, the measurement results may continue to be superimposed according to step 502 of the embodiments of the present disclosure, and the update of the detection variables of the first and second PSFCH resources may be judged, that is, it is judged whether the failure to detect the PSFCH feedback on the first and second PSFCH resources is due to the LBT failure in combination with the measurement results. When it is determined that the failure to detect the PSFCH feedback is related to the LBT failure, the current value of the detection variable is not updated. Otherwise, the detection variable is allowed to be updated. As a possible implementation, according to step 602 of the embodiments of the present disclosure, the detection variables of the first and second PSFCH resources may be directly updated, that is, the consecutive DTX detection variable corresponding to the unicast connection may be directly increased by 1.

In step 402, for each PSFCH resource where no PSFCH feedback is detected, a detection variable is updated, in which the detection variable is associated with the unicast connection and configured to count a numeric count of consecutive DTXs of the unicast connection.

For the embodiments of the present disclosure, as a possible implementation, it is possible to determine the PSFCH resources where no PSFCH feedback is detected among all the PSFCH resources associated with the PSSCH, and further to update the detection variable for each PSFCH resource where no PSFCH feedback is detected. Specifically, when it is judged that the failure to detect the PSFCH feedback on a certain PSFCH resource is less related to the LBT failure, the current value of the consecutive DTX detection variable corresponding to the unicast connection may be increased by 1; and when it is judged that the failure to detect the PSFCH feedback on a certain PSFCH resource is more related to the LBT failure, the current value of the consecutive DTX detection variable corresponding to the unicast connection is reset to 0, or the current value of the detection variable is kept unchanged. For details, reference may be made to the relevant descriptions in steps 501 to 502 of the embodiments of the present disclosure.

To sum up, according to the processing method for the sidelink radio link failure provided by the embodiments of the present disclosure, the PSFCH feedback may be detected on each PSFCH resource associated with the PSSCH, and the detection variable may be updated for each PSFCH resource where no PSFCH feedback is detected. Through the technical scheme in the present disclosure, the update of the consecutive DTX detection variable may be distinguished from the LBT failure, thus effectively alleviating the problem of triggering the sidelink radio link failure due to the LBT failure.

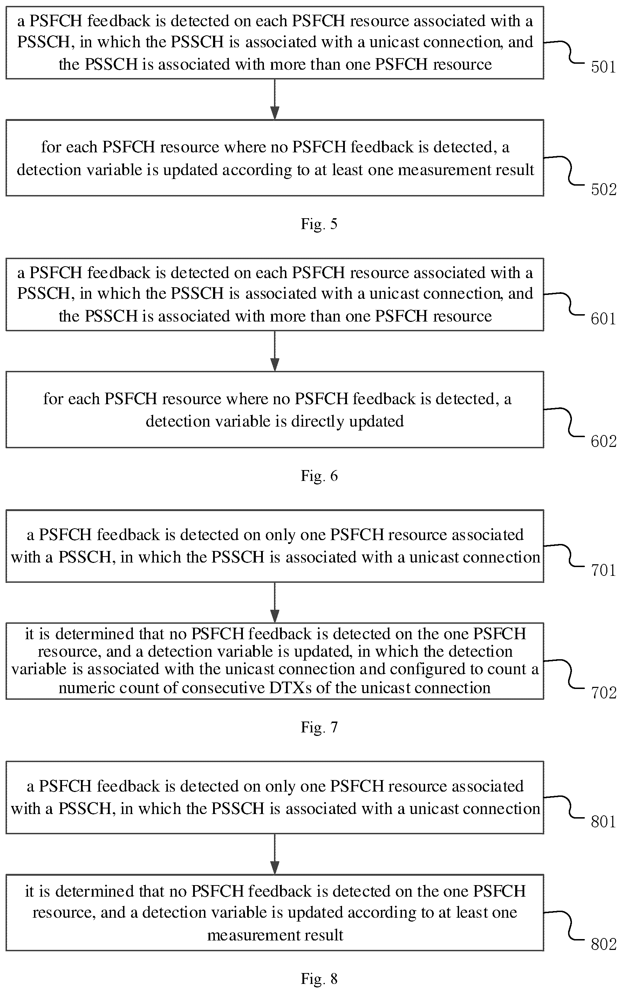

Fig. 5 shows a processing method for a sidelink radio link failure according to an embodiment of the present disclosure, which is performed by a terminal. Based on the embodiment shown in Fig. 4, as shown in Fig. 5, the method may include the following steps.

In step 501, a PSFCH feedback is detected on each PSFCH resource associated with a PSSCH, in which the PSSCH is associated with a unicast connection, and the PSSCH is associated with more than one PSFCH resource.

For this embodiment of the present disclosure, reference may be made to the relevant description in step 401 of the embodiments of the present disclosure for details, which will not be repeated here.

In step 502, for each PSFCH resource where no PSFCH feedback is detected, a detection variable is updated according to at least one measurement result.

In an optional embodiment, the at least one measurement result may include, for example, at least one of a received signal strength indicator (RSSI) measurement result, a first channel occupancy (CO) measurement result, and a second channel busy ratio (CBR) measurement result. A CO is a channel occupancy of an unlicensed spectrum, and a CBR is a channel busy ratio of a sidelink. It should be noted that the at least one measurement result is not limited to the above measurement results, and may also be determined by detecting other indicators of signal strength of peripheral terminals or other indicators of channel occupancy, which is not listed exhaustively here.

In an optional embodiment, when determining whether the failure to detect the PSFCH feedback on a certain PSFCH resource associated with the PSSCH is related to the LBT failure, the determination may be made according to at least one of the RSSI measurement result, the CO measurement result and the CBR measurement result. It should be noted that when determining whether the failure to detect the PSFCH feedback on a certain PSFCH resource associated with the PSSCH is related to the LBT failure, the determination is not limited to the above measurement results, and may also be made by detecting other indicators of signal strength of peripheral terminals or other indicators of channel occupancy, which is not listed exhaustively here.

For the embodiments of the present disclosure, the terminal may measure the RSSI according to configuration information transmitted by the network side for instructing to perform the RSSI measurement, and obtain the RSSI measurement result. In addition, the configuration information may be determined through network side configuration or pre-configuration, and a first threshold value may be determined according to the configuration information. The first threshold value is used to be compared with the RSSI measurement result to determine whether the LBT failure is the cause of the failure to detect the PSFCH feedback on the PSFCH resource. When it is judged that the failure to detect the PSFCH feedback is related to the LBT failure, the current value of the consecutive DTX detection variable corresponding to the unicast connection is not updated. Otherwise, the consecutive DTX detection variable corresponding to the unicast connection is allowed to be updated. When the configuration information is determined by the network side configuration, a dedicated radio resource control (RRC) signaling transmitted by a network device is received, and the dedicated RRC signaling is configured to configure the configuration information; or a system information block (SIB) signaling transmitted by the network device is received, and the SIB signaling is configured to configure the configuration information. Further, by comparing the measured RSSI with the first threshold value, it may be determined whether the detection variable needs to be updated.

For the embodiments of the present disclosure, the terminal may measure the RSSI and obtain the RSSI measurement result according to the configuration information transmitted by the network side for instructing to perform the RSSI measurement, and/or measure the CO and obtain the CO measurement result according to the configuration information transmitted by the network side for instructing to perform the CO measurement, and/or measure the CBR and obtain the CBR measurement result according to the configuration information transmitted by the network side for instructing to perform the CBR measurement. In addition, the terminal may also determine the configuration information through the network side configuration or pre-configuration, and determine the first threshold value and/or the second threshold value and/or the third threshold value according to the configuration information. The first threshold value is used to be compared with the RSSI measurement result to determine whether the LBT failure is the cause of the failure to detect the PSFCH feedback on all the PSFCH resources. The second threshold value is used to be compared with the CO measurement result to determine whether the LBT failure is the cause of the failure to detect the PSFCH feedback on all the PSFCH resources. The third threshold value is used to be compared with the CBR measurement result to determine whether the LBT failure is the cause of the failure to detect the PSFCH feedback on each PSFCH resource associated with the PSSCH. When it is determined that the failure to detect the PSFCH feedback is related to the LBT failure, the current value of the consecutive DTX detection variable corresponding to the unicast connection is not updated. Otherwise, the consecutive DTX detection variable corresponding to the unicast connection is allowed to be updated.

When the configuration information is determined by the network side configuration, the dedicated RRC signaling transmitted by the network device may be received, and the dedicated RRC signaling is configured to configure the configuration information; or the SIB signaling transmitted by the network device may be received, and the SIB signaling is used to configure the configuration information. Specifically, the first threshold value and/or the second threshold value and/or the third threshold value may be configured or preconfigured by the network device. As a possible implementation, the terminal in the network connection coverage may obtain the first threshold value and/or the second threshold value and/or the third threshold value through the dedicated RRC signaling or the SIB signaling transmitted by the network side. As a possible implementation, the terminal out of the network connection coverage, that is, the terminal without network connection, may obtain the first threshold value and/or the second threshold value and/or the third threshold value through the pre-configuration.

For the embodiments of the present disclosure, as an implementation, the terminal may independently determine whether the failure to detect the PSFCH feedback on each PSFCH resource associated with the PSSCH is due to the LBT failure according to any one of the RSSI measurement result, the CO measurement result and the CBR measurement result. As an implementation, in order to avoid misjudgment and fully improve the accuracy of judgment when it is determined whether the LBT failure is related to the failure to detect the PSFCH feedback on each PSFCH resource associated with the PSSCH, it may be comprehensively determined whether the failure to detect the PSFCH feedback on a certain PSFCH resource associated with the PSSCH is due to the LBT failure by using any two or three of the RSSI measurement result, the CO measurement result and the CBR measurement result. Specifically, when it is determined that at least one of the RSSI measurement result, the CO measurement result and the CBR measurement result is greater than or equal to its respective threshold value, it indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. On the contrary, when the terminal judges that the failure to detect the PSFCH feedback on a certain PSFCH resource associated with the PSSCH is not related to the LBT failure according to the fact that at least one of the RSSI measurement result, the CO measurement result and the CBR measurement result is less than or equal to the respective threshold value, it may add 1 to the consecutive DTX detection variable corresponding to the unicast connection.

In an optional embodiment, the terminal may use the latest RSSI measurement result and/or the latest CO measurement result and/or the latest CBR measurement result as the comparison basis; or the terminal may re-measure the RSSI and/or CO and/or CBR when it is determined that no PSFCH feedback is detected on all the PSFCH resources, and use the re-measured RSSI and/or CO and/or CBR as the comparison basis; or the terminal currently has an available RSSI measurement result and/or CO measurement result and/or CBR measurement result, and the current RSSI and/or CO and/or CBR are used as the comparison basis. There may be other implementations, which are not limited in this embodiment.

In an optional embodiment, for each PSFCH resource associated with the PSSCH, where no PSFCH feedback is detected, it is determined whether it is necessary to update the consecutive DTX detection variable corresponding to the unicast connection by comparing the measured RSSI with the first threshold value. As a possible implementation, the terminal determines that the RSSI measurement result is greater than or equal to the first threshold value, which indicates that there are many terminals transmitting and receiving signals on the PSFCH resource, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the RSSI measurement result is less than or equal to the first threshold value, which indicates that the probability of the LBT failure is small at this time, so that it is necessary to add 1 to the consecutive DTX detection variable corresponding to the unicast connection.

In an optional embodiment, for each PSFCH resource associated with the PSSCH, where no PSFCH feedback is detected, it is determined whether it is necessary to update the detection variable by comparing the measured CO measurement result with the second threshold value. As a possible implementation, the terminal determines that the CO measurement result is greater than or equal to the second threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CO measurement result is less than or equal to the second threshold value, which indicates that the probability of the LBT failure is small at this time, so that it is necessary to add 1 to the consecutive DTX detection variable corresponding to the unicast connection.

In an optional embodiment, for each PSFCH resource associated with the PSSCH, where no PSFCH feedback is detected, it is determined whether it is necessary to update the detection variable by comparing the measured CBR measurement result with the third threshold value. As a possible implementation, the terminal determines that the CBR measurement result is greater than or equal to the third threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CBR measurement result is less than or equal to the third threshold value, which indicates that the probability of the LBT failure is small at this time, so that it is necessary to add 1 to the consecutive DTX detection variable corresponding to the unicast connection.

For each PSFCH resource where no PSFCH feedback is detected, in an optional embodiment, two measurement results (such as the RSSI measurement result and the CO measurement result, or the RSSI measurement result and the CBR measurement result, or the CO measurement result and the CBR measurement result, etc.) may be used to comprehensively determine whether the failure to detect the PSFCH feedback on the PSFCH resource is due to the LBT failure. When the two measurement results are respectively greater than or equal to their respective threshold values, that is, none of the two measurement results is less than or equal to its respective threshold value, it is judged that the probability of the LBT failure is high at this time, and it is further determined that the failure to detect the PSFCH feedback on the PSFCH resource is due to the LBT failure. In an optional embodiment, three measurement results, namely the RSSI measurement result, the CO measurement result and the CBR measurement result, may be used to comprehensively determine whether the failure to detect the PSFCH feedback on the PSFCH resource is due to the LBT failure. When it is determined that at least two of the RSSI measurement result, the CO measurement result and the CBR measurement result are respectively greater than or equal to their respective threshold values, that is, it is equivalent to determining that at most one (only one or none) of the RSSI measurement result, the CO measurement result and the CBR measurement result is less than or equal to its respective threshold value, it may be judged that the probability of the LBT failure is high at this time, and it is further determined that the failure to detect the PSFCH feedback on the PSFCH resource is due to the LBT failure. Specifically, as a possible implementation, when the terminal determines that the RSSI measurement result is greater than or equal to the first threshold value, and determines that the CO measurement result is greater than or equal to the second threshold value, it may be judged that the failure to detect the PSFCH feedback on the PSFCH resource is related to the LBT failure. As a possible implementation, when the terminal determines that the RSSI measurement result is greater than or equal to the first threshold value, and determines that the CBR measurement result is greater than or equal to the third threshold value, it may be judged that the failure to detect the PSFCH feedback on the PSFCH resource is related to the LBT failure. As a possible implementation, when the terminal determines that the CO measurement result is greater than or equal to the second threshold value, and determines that the CBR measurement result is greater than or equal to the third threshold value, it may be judged that the failure to detect the PSFCH feedback on the PSFCH resource is related to the LBT failure. As a possible implementation, when the terminal determines that the RSSI measurement result is greater than or equal to the first threshold value, determines that the CO measurement result is greater than or equal to the second threshold value, and determines that the CBR measurement result is greater than or equal to the third threshold value, it may be judged that the failure to detect the PSFCH feedback on the PSFCH resource is related to the LBT failure. For each PSFCH resource where no PSFCH feedback is detected, when the terminal judges that the failure to detect the PSFCH feedback is related to the LBT failure, it does not add 1 to the consecutive DTX detection variable corresponding to the unicast connection, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0.

Similarly, for each PSFCH resource where no PSFCH feedback is detected, in an optional embodiment, two measurement results (such as the RSSI and the CO measurement results, or the RSSI measurement result and the CBR measurement result, or the CO measurement result and the CBR measurement result, etc.) may be used to comprehensively determine whether the failure to detect the PSFCH feedback on the PSFCH resource is due to the LBT failure. When the two measurement results are less than or equal to their respective threshold values, that is, none of the two measurement results is greater than or equal to its respective threshold value, it is judged that the probability of the LBT failure is small at this time, and it is further determined that the failure to detect the PSFCH feedback on the PSFCH resource is not related to the LBT failure. In an optional embodiment, three measurement results, namely the RSSI measurement result, the CO measurement result and the CBR measurement result, may be used to comprehensively determine whether the failure to detect the PSFCH feedback on the PSFCH resource is due to the LBT failure. When it is determined that at least two of the RSSI measurement result, the CO measurement result and the CBR measurement result are less than or equal to their respective threshold values, that is, it is equivalent to determining that at most one (only one or none) of the RSSI measurement result, the CO measurement result and the CBR measurement result is greater than or equal to its respective threshold value, it indicates that the probability of the LBT failure is small at this time, and it is judged that the failure to detect the PSFCH feedback on the PSFCH resource is not related to the LBT failure. Specifically, as a possible implementation, when the terminal determines that the RSSI measurement result is less than or equal to the first threshold value, and determines that the CO measurement result is less than or equal to the second threshold value, it may be judged that the failure to detect the PSFCH feedback on the PSFCH resource is not related to the LBT failure. As a possible implementation, when the terminal determines that the RSSI measurement result is less than or equal to the first threshold value, and determines that the CBR measurement result is less than or equal to the third threshold value, it may be judged that the failure to detect the PSFCH feedback on the PSFCH resource is not related to the LBT failure. As a possible implementation, when the terminal determines that the CO measurement result is less than or equal to the second threshold value, and determines that the CBR measurement result is less than or equal to the third threshold value, it may be judged that the failure to detect the PSFCH feedback on the PSFCH resource is not related to the LBT failure. As a possible implementation, when the terminal determines that the RSSI measurement result is less than or equal to the first threshold value, determines that the CO measurement result is less than or equal to the second threshold value, and determines that the CBR measurement result is less than or equal to the third threshold value, it may be judged that the failure to detect the PSFCH feedback on the PSFCH resource is not related to the LBT failure. For each PSFCH resource where no PSFCH feedback is detected, when the terminal judges that the failure to detect the PSFCH feedback is not related to the LBT failure, it adds 1 to the consecutive DTX detection variable corresponding to the unicast connection.

To sum up, according to the processing method for the sidelink radio link failure provided by the embodiments of the present disclosure, it is possible to detect the PSFCH feedback on each PSFCH resource associated with the PSSCH, and for each PSFCH resource where no PSFCH feedback is detected, it is judged whether the failure to detect the PSFCH feedback on the PSFCH resource is due to the LBT failure in combination with the at least one measurement result. The current value of the detection variable is not updated when it is determined that the failure to detect the PSFCH feedback is related to the LBT failure. Otherwise, the detection variable is allowed to be updated. Through the technical scheme in the present disclosure, the update of the consecutive DTX detection variable may be distinguished from the LBT failure, thus effectively alleviating the problem of triggering the sidelink radio link failure due to the LBT failure.

Fig. 6 shows a processing method for a sidelink radio link failure according to an embodiment of the present disclosure, which is performed by a terminal. Based on the embodiment shown in Fig. 4, as shown in Fig. 6, the method may include the following steps.

In step 601, a PSFCH feedback is detected on each PSFCH resource associated with a PSSCH, in which the PSSCH is associated with a unicast connection, and the PSSCH is associated with more than one PSFCH resource.

For this embodiment of the present disclosure, reference may be made to the relevant description in step 401 of the embodiments of the present disclosure for details, which will not be repeated here.

In step 602, for each PSFCH resource where no PSFCH feedback is detected, a detection variable is directly updated.

For the embodiments of the present disclosure, for each PSFCH resource where no PSFCH feedback is detected, the terminal may directly add 1 to the consecutive DTX detection variable corresponding to the unicast connection.

To sum up, according to the processing method for the sidelink radio link failure provided by the embodiments of the present disclosure, the PSFCH feedback may be detected on each PSFCH resource associated with the PSSCH, and the detection variable may be directly updated for each PSFCH resource where no PSFCH feedback is detected. Through the technical scheme in the present disclosure, the update of the consecutive DTX detection variable may be distinguished from the LBT failure, thus effectively alleviating the problem of triggering the sidelink radio link failure due to the LBT failure.

Fig. 7 shows a flow chart of a processing method of a sidelink radio link failure according to an embodiment of the present disclosure. As shown in Fig. 7, the method is performed by a terminal, and may include the following steps.

In step 701, a PSFCH feedback is detected on only one PSFCH resource associated with a PSSCH, in which the PSSCH is associated with a unicast connection.

In a specific application scenario, the PSSCH may be associated with at least one PSFCH resource at the same time. For the embodiments of the present disclosure, when the PSSCH is associated with only one PSFCH resource, the terminal may detect whether the PSFCH feedback exists at an opportunity of the only one PSFCH resource associated with the PSSCH. It may be understood that the PSSCH may also be associated with at least one PSFCH resource at the same time. For the embodiments of the present disclosure, when the PSSCH is associated with more than one PSFCH resource, the terminal may detect whether the PSFCH feedback exists at the opportunities of all the PSFCH resources associated with the PSSCH. The opportunity includes a frequency domain resource and/or a time domain resource corresponding to the PSFCH resource.

In step 702, it is determined that no PSFCH feedback is detected on the one PSFCH resource, and a detection variable is updated, in which the detection variable is associated with the unicast connection and configured to count a numeric count of consecutive DTXs of the unicast connection.

For the embodiments of the present disclosure, as a possible implementation, the consecutive DTX detection variable corresponding to the unicast connection may be updated, when it is judged that no PSFCH feedback is detected on the only one PSFCH resource associated with the PSSCH. Specifically, when it is judged that the failure to detect the PSFCH feedback on the PSFCH resource is less related to the LBT failure, the current value of the consecutive DTX detection variable corresponding to the unicast connection may be increased by 1; and when it is judged that the failure to detect the PSFCH feedback on the PSFCH resource is more related to the LBT failure, the current value of the consecutive DTX detection variable corresponding to the unicast connection may be reset to 0, or the current value of the detection variable may be kept unchanged. As a possible implementation, when it is determined that no PSFCH feedback is detected on the one PSFCH resource, the terminal may directly add 1 to the consecutive DTX detection variable corresponding to the unicast connection. As a possible implementation, when it is determined that no PSFCH feedback is detected on the one PSFCH resource, the terminal may continue to superimpose the measurement results according to step 802 of the embodiments of the present disclosure, and judge the update of the detection variable for the one PSFCH resource where no PSFCH feedback is detected, that is, judge whether the failure to detect the PSFCH feedback on the PSFCH resource is due to the LBT failure in combination with the measurement results. When it is judged that the failure to detect the PSFCH feedback is related to the LBT failure, the current value of the detection variable is not updated. As a possible implementation, when it is determined that no PSFCH feedback is detected on the one PSFCH resource, the consecutive DTX detection variable corresponding to the unicast connection may be directly increased by 1 according to step 902 of the embodiments of the present disclosure.

To sum up, according to the processing method for the sidelink radio link failure provided by the embodiments of the present disclosure, the PSFCH feedback may be detected on the only one PSFCH resource associated with the PSSCH, and when it is determined that no PSFCH feedback is detected on the PSFCH resource, the detection variable may be updated. Through the technical scheme in the present disclosure, the update of the consecutive DTX detection variable may be distinguished from the LBT failure, thus effectively alleviating the problem of triggering the sidelink radio link failure due to the LBT failure.

Fig. 8 shows a processing method for a sidelink radio link failure according to an embodiment of the present disclosure, which is performed by a terminal. Based on the embodiment shown in Fig. 7, as shown in Fig. 8, the method may include the following steps.

In step 801, a PSFCH feedback is detected on only one PSFCH resource associated with a PSSCH, in which the PSSCH is associated with a unicast connection.

For this embodiment of the present disclosure, reference may be made to the relevant description in step 701 of the embodiments of the present disclosure for details, which is not repeated here.

In step 802, it is determined that no PSFCH feedback is detected on the one PSFCH resource, and a detection variable is updated according to at least one measurement result.

In an optional embodiment, the at least one measurement result may include, for example, at least one of a received signal strength indicator (RSSI) measurement result, a first channel occupancy (CO) measurement result, and a second channel busy ratio (CBR) measurement result. A CO is a channel occupancy of an unlicensed spectrum, and a CBR is a channel busy ratio of a sidelink. It should be noted that the at least one measurement result is not limited to the above measurement results, and may also be determined by detecting other indicators of signal strength of peripheral terminals or other indicators of channel occupancy, which is not listed exhaustively here.

In an optional embodiment, when determining whether the failure to detect the PSFCH feedback on the only one PSFCH resource associated with the PSSCH is related to the LBT failure, the determination may be made according to at least one of the RSSI measurement result, the CO measurement result and the CBR measurement result. It should be noted that when determining whether the failure to detect the PSFCH feedback on the only one PSFCH resource associated with the PSSCH is related to the LBT failure, the determination is not limited to the above measurement results, and may also be made by detecting other indicators of signal strength of peripheral terminals or other indicators of channel occupancy, which is not listed exhaustively here.

For the embodiments of the present disclosure, the terminal may measure the RSSI according to configuration information transmitted by the network side for instructing to perform the RSSI measurement, and obtain the RSSI measurement result. In addition, the configuration information may be determined through network side configuration or pre-configuration, and a first threshold value may be determined according to the configuration information. The first threshold value is used to be compared with the RSSI measurement result to determine whether the LBT failure is the cause of the failure to detect the PSFCH feedback on the PSFCH resource. When it is judged that the failure to detect the PSFCH feedback is related to the LBT failure, the current value of the consecutive DTX detection variable corresponding to the unicast connection is not updated. Otherwise, the consecutive DTX detection variable corresponding to the unicast connection is allowed to be updated. When the configuration information is determined by the network side configuration, the terminal in the network connection coverage may receive a dedicated radio resource control (RRC) signaling transmitted by the network device, and the dedicated RRC signaling is used to configure the configuration information; or the terminal in the network connection coverage may receive a system information block (SIB) signaling transmitted by the network device, and the SIB signaling is used to configure the configuration information. The terminal out of the network connection coverage, that is, the terminal without network connection, may obtain the first threshold value through pre-configuration. After the first threshold value is determined, it may be further determined whether the detection variable needs to be updated by comparing the measured RSSI with the first threshold value.

For the embodiments of the present disclosure, the terminal may measure the RSSI and obtain the RSSI measurement result according to the configuration information transmitted by the network side for instructing to perform the RSSI measurement, and/or measure the CO and obtain the CO measurement result according to the configuration information transmitted by the network side for instructing to perform the CO measurement, and/or measure the CBR and obtain the CBR measurement result according to the configuration information transmitted by the network side for instructing to perform the CBR measurement. In addition, the terminal may also determine the configuration information through the network side configuration or pre-configuration, and determine the first threshold value and/or the second threshold value and/or the third threshold value according to the configuration information. The first threshold value is used to be compared with the RSSI measurement result to determine whether the LBT failure is the cause of the failure to detect the PSFCH feedback on all the PSFCH resources. The second threshold value is used to be compared with the CO measurement result to determine whether the LBT failure is the cause of the failure to detect the PSFCH feedback on all the PSFCH resources. The third threshold value is used to be compared with the CBR measurement result to determine whether the LBT failure is the cause of the failure to detect the PSFCH feedback on all the PSFCH resources. When it is determined that the failure to detect the PSFCH feedback is related to the LBT failure, the current value of the consecutive DTX detection variable corresponding to the unicast connection is not updated. Otherwise, the consecutive DTX detection variable corresponding to the unicast connection is allowed to be updated.

When the configuration information is determined by the network side configuration, the dedicated RRC signaling transmitted by the network device may be received, and the dedicated RRC signaling is configured to configure the configuration information; or the SIB signaling transmitted by the network device may be received, and the SIB signaling is used to configure the configuration information. Specifically, the first threshold value and/or the second threshold value and/or the third threshold value may be configured or preconfigured by the network device. As a possible implementation, the terminal in the network connection coverage may obtain the first threshold value and/or the second threshold value and/or the third threshold value through the dedicated RRC signaling or the SIB signaling transmitted by the network side. As a possible implementation, the terminal out of the network connection coverage, that is, the terminal without network connection, may obtain the first threshold value and/or the second threshold value and/or the third threshold value through the pre-configuration.

For the embodiments of the present disclosure, as an implementation, the terminal may independently determine whether the failure to detect the PSFCH feedback on the only one PSFCH resource associated with the PSSCH is due to the LBT failure according to any one of the RSSI measurement result, the CO measurement result and the CBR measurement result. As an implementation, in order to avoid misjudgment and fully improve the accuracy of judgment when it is determined whether the LBT failure is related to the failure to detect the PSFCH feedback on the only one PSFCH resource associated with the PSSCH, it may be comprehensively determined whether the failure to detect the PSFCH feedback on the only one PSFCH resource associated with the PSSCH is due to the LBT failure by using any two or three of the RSSI measurement result, the CO measurement result and the CBR measurement result. Specifically, when it is determined that at least one of the RSSI measurement result, the CO measurement result and the CBR measurement result is greater than or equal to its respective threshold value, it indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. On the contrary, when the terminal judges that the failure to detect the PSFCH feedback on the only one PSFCH resource associated with the PSSCH is not related to the LBT failure according to the fact that at least one of the RSSI measurement result, the CO measurement result and the CBR measurement result is less than or equal to the respective threshold value, it may add 1 to the consecutive DTX detection variable corresponding to the unicast connection.

In an optional embodiment, the terminal may use the latest RSSI measurement result and/or the latest CO measurement result and/or the latest CBR measurement result as the comparison basis; or the terminal may re-measure the RSSI and/or CO and/or CBR when it is determined that no PSFCH feedback is detected on all the PSFCH resources, and use the re-measured RSSI and/or CO and/or CBR as the comparison basis; or the terminal currently has an available RSSI measurement result and/or CO measurement result and/or CBR measurement result, and the current RSSI and/or CO and/or CBR are used as the comparison basis. There may be other implementations, which are not limited in this embodiment.

In an optional embodiment, for the one PSFCH resource where no PSFCH feedback is detected, it is determined whether it is necessary to update the detection variable by comparing the measured RSSI with the first threshold value. As a possible implementation, the terminal determines that the RSSI measurement result is greater than or equal to the first threshold value, which indicates that there are many terminals transmitting and receiving signals on the PSFCH resource, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the RSSI measurement result is less than or equal to the first threshold value, which indicates that the probability of the LBT failure is small at this time, so that it is necessary to add 1 to the consecutive DTX detection variable corresponding to the unicast connection.

In an optional embodiment, when no PSFCH feedback is detected on the only one PSFCH resource associated with the PSSCH, it is determined whether it is necessary to update the detection variable by comparing the measured CO measurement result with the second threshold value. As a possible implementation, the terminal determines that the CO measurement result is greater than or equal to the second threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CO measurement result is less than or equal to the second threshold value, which indicates that the probability of the LBT failure is small at this time, so that it is necessary to add 1 to the consecutive DTX detection variable corresponding to the unicast connection.

In an optional embodiment, when no PSFCH feedback is detected on the only one PSFCH resource associated with the PSSCH, it is determined whether it is necessary to update the detection variable by comparing the measured CBR measurement result with the third threshold value. As a possible implementation, the terminal determines that the CBR measurement result is greater than or equal to the third threshold value, which indicates that there are many terminals transmitting and receiving signals around, and the probability of the LBT failure is high, that is, the failure to detect the PSFCH feedback is most likely due to the fact that other terminals are competing for resources, and the PSFCH feedback of the current terminal fails in the competition. Therefore, in this case, the consecutive DTX detection variable corresponding to the unicast connection is not added by 1, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0. As a possible implementation, the terminal determines that the CBR measurement result is less than or equal to the third threshold value, which indicates that the probability of the LBT failure is small at this time, so that it is necessary to add 1 to the consecutive DTX detection variable corresponding to the unicast connection.

In an optional embodiment, two measurement results (such as the RSSI measurement result and the CO measurement result, or the RSSI measurement result and the CBR measurement result, or the CO measurement result and the CBR measurement result, etc.) may be used to comprehensively determine whether the failure to detect the PSFCH feedback on the only one PSFCH resource associated with the PSSCH is due to the LBT failure. When the two measurement results are respectively greater than or equal to their respective threshold values, that is, none of the two measurement results is less than or equal to its respective threshold value, it is judged that the probability of the LBT failure is high at this time, and it is further determined that the failure to detect the PSFCH feedback on the only one PSFCH resource associated with the PSSCH is due to the LBT failure. In an optional embodiment, the RSSI measurement result, the CO measurement result and the CBR measurement result may be used to comprehensively determine whether the failure to detect the PSFCH feedback on the only one PSFCH resource associated with the PSSCH is due to the LBT failure. When it is determined that at least two of the RSSI measurement result, the CO measurement result and the CBR measurement result are respectively greater than or equal to their respective threshold values, that is, it is equivalent to determining that at most one (only one or none) of the RSSI measurement result, the CO measurement result and the CBR measurement result is less than or equal to its respective threshold value, it may be judged that the probability of the LBT failure is high at this time, and it is further determined that the failure to detect the PSFCH feedback on the only one PSFCH resource associated with the PSSCH is due to the LBT failure. As a possible implementation, when the terminal determines that the RSSI measurement result is greater than or equal to the first threshold value, and determines that the CO measurement result is greater than or equal to the second threshold value, it may be judged that the failure to detect the PSFCH feedback on the PSFCH resource is related to the LBT failure. As a possible implementation, when the terminal determines that the RSSI measurement result is greater than or equal to the first threshold value, and determines that the CBR measurement result is greater than or equal to the third threshold value, it may be judged that the failure to detect the PSFCH feedback on the PSFCH resource is related to the LBT failure. As a possible implementation, when the terminal determines that the CO measurement result is greater than or equal to the second threshold value, and determines that the CBR measurement result is greater than or equal to the third threshold value, it may be judged that the failure to detect the PSFCH feedback on the PSFCH resource is related to the LBT failure. As a possible implementation, when the terminal determines that the RSSI measurement result is greater than or equal to the first threshold value, determines that the CO measurement result is greater than or equal to the second threshold value, and determines that the CBR measurement result is greater than or equal to the third threshold value, it may be judged that the failure to detect the PSFCH feedback on the PSFCH resource is related to the LBT failure. When the terminal judges that the failure to detect the PSFCH feedback on the only one PSFCH resource associated with the PSSCH is related to the LBT failure, it does not add 1 to the consecutive DTX detection variable corresponding to the unicast connection, so as to avoid triggering the sidelink radio link failure due to the influence of LBT. Optionally, the terminal may reset the consecutive DTX detection variable corresponding to the unicast connection to 0, or keep the current value of the consecutive DTX detection variable corresponding to the unicast connection unchanged without resetting the consecutive DTX detection variable corresponding to the unicast connection to 0.

Similarly, in an optional embodiment, two measurement results (such as the RSSI and the CO measurement results, or the RSSI measurement result and the CBR measurement result, or the CO measurement result and the CBR measurement result, etc.) may be used to comprehensively determine whether the failure to detect the PSFCH feedback on the only one PSFCH resource associated with the PSSCH is due to the LBT failure. When the two measurement results are less than or equal to their respective threshold values, that is, none of the two measurement results is greater than or equal to its respective threshold value, it is judged that the probability of the LBT failure is small at this time, and it is further determined that the failure to detect the PSFCH feedback on the only one PSFCH resource associated with the PSSCH is not related to the LBT failure. In an optional embodiment, the RSSI measurement result, the CO measurement result and the CBR measurement result may be used to comprehensively determine whether the failure to detect the PSFCH feedback on the only one PSFCH resource associated with the PSSCH is due to the LBT failure. When it is determined that at least two of the RSSI measurement result, the CO measurement result and the CBR measurement result are less than or equal to their respective threshold values, that is, it is equivalent to determining that at most one (only one or none) of the RSSI measurement result, the CO measurement result and the CBR measurement result is greater than or equal to its respective threshold value, it indicates that the probability of the LBT failure is small at this time, and it is judged that the failure to detect the PSFCH feedback on the only one PSFCH resource associated with the PSSCH is not related to the LBT failure. Specifically, as a possible implementation, when the terminal determines that the RSSI measurement result is less than or equal to the first threshold value, and determines that the CO measurement result is less than or equal to the second threshold value, it may be judged that the failure to detect the PSFCH feedback on the only one PSFCH resource associated with the PSSCH is not related to the LBT failure. As a possible implementation, when the terminal determines that the RSSI measurement result is less than or equal to the first threshold value, and determines that the CBR measurement result is less than or equal to the third threshold value, it may be judged that the failure to detect the PSFCH feedback on the only one PSFCH resource associated with the PSSCH is not related to the LBT failure. As a possible implementation, when the terminal determines that the CO measurement result is less than or equal to the second threshold value, and determines that the CBR measurement result is less than or equal to the third threshold value, it may be judged that the failure to detect the PSFCH feedback on the only one PSFCH resource associated with the PSSCH is not related to the LBT failure. As a possible implementation, when the terminal determines that the RSSI measurement result is less than or equal to the first threshold value, determines that the CO measurement result is less than or equal to the second threshold value, and determines that the CBR measurement result is less than or equal to the third threshold value, it may be judged that the failure to detect the PSFCH feedback on the only one PSFCH resource associated with the PSSCH is not related to the LBT failure. When the terminal judges that the failure to detect the PSFCH feedback on the only one PSFCH resource associated with the PSSCH is not related to the LBT failure, it adds 1 to the consecutive DTX detection variable corresponding to the unicast connection.

To sum up, according to the processing method for the sidelink radio link failure provided by the embodiments of the present disclosure, when no PSFCH feedback is detected on the only one PSSCH resource associated with the PSSCH, it is judged whether the failure to detect the PSFCH feedback on the PSFCH resource is due to the LBT failure in combination with the RSSI. When it is judged that the failure to detect the PSFCH feedback is related to the LBT failure, the current value of the detection variable is not updated. Otherwise, the detection variable is allowed to be updated. Through the technical scheme in the present disclosure, the update of the consecutive DTX detection variable may be distinguished from the LBT failure, thus effectively alleviating the problem of triggering the sidelink radio link failure due to the LBT failure.

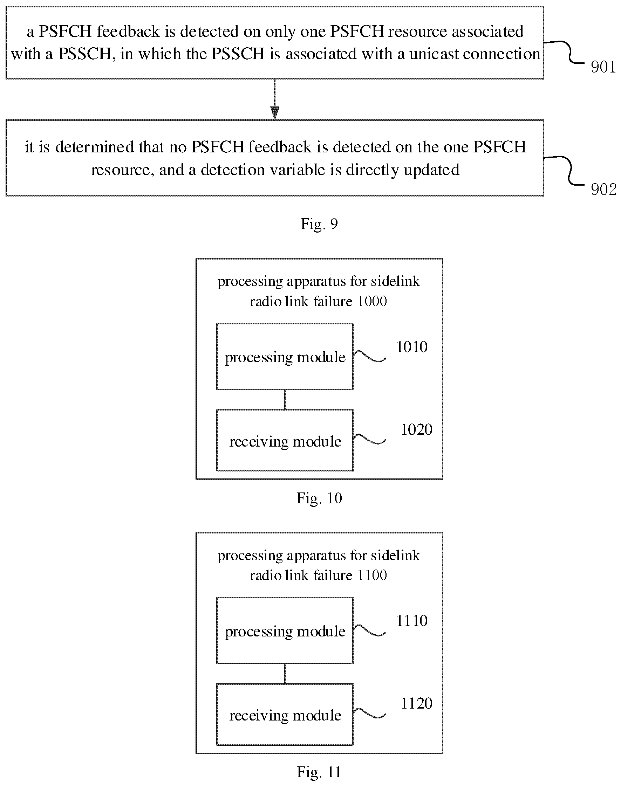

Fig. 9 shows a processing method for a sidelink radio link failure according to an embodiment of the present disclosure, which is performed by a terminal. Based on the embodiment shown in Fig. 7, as shown in Fig. 9, the method may include the following steps.

In step 901, a PSFCH feedback is detected on only one PSFCH resource associated with a PSSCH, in which the PSSCH is associated with a unicast connection.

For this embodiment of the present disclosure, reference may be made to the relevant description in step 701 of the embodiments of the present disclosure for details, which is not repeated here.

In step 902, it is determined that no PSFCH feedback is detected on the one PSFCH resource, and a detection variable is directly updated.

For the embodiments of the present disclosure, when no PSFCH feedback is detected on the only one PSFCH resource associated with the PSSCH, the terminal may directly add 1 to the consecutive DTX detection variable corresponding to the unicast connection.

To sum up, according to the processing method for the sidelink radio link failure provided by the embodiments of the present disclosure, the PSFCH feedback may be directly detected on the only one PSFCH resource associated with the PSSCH, and the detection variable may be directly updated for each PSFCH resource where no PSFCH feedback is detected. Through the technical scheme in the present disclosure, the update of the consecutive DTX detection variable may be distinguished from the LBT failure, thus effectively alleviating the problem of triggering the sidelink radio link failure due to the LBT failure.

In the above embodiments provided by the present disclosure, the methods provided by the embodiments of the present disclosure are introduced from the perspective of the terminal. In order to realize the functions in the methods provided by the embodiments of the present disclosure, the terminal may include a hardware structure and a software module, and the above functions are realized in the form of the hardware structure, the software module, or the hardware structure plus the software module. A certain one of the above functions may be implemented in the form of the hardware structure, the software module, or the combination of the hardware structure and the software module.

Corresponding to the processing methods for the sidelink radio link failure provided by the above embodiments, the present disclosure also provides a processing apparatus for the sidelink radio link failure, which may be applied to the terminal side. Since the processing apparatus for the sidelink radio link failure provided by the embodiments of the present disclosure corresponds to the processing methods for the sidelink radio link failure provided by the above embodiments, the embodiments of the processing methods for the sidelink radio link failure are also applicable to the processing apparatus for the sidelink radio link failure provided by this embodiment, which will not be described in detail in this embodiment.

Fig. 10 is a schematic diagram of a processing apparatus 1000 for a sidelink radio link failure according to an embodiment of the present disclosure.

As shown in Fig. 10, the processing apparatus 1000 for the sidelink radio link failure include a processing module 1010 configured to: detect a PSFCH feedback on all PSFCH resources associated with a PSSCH, in which the PSSCH is associated with a unicast connection, and the PSSCH is associated with more than one PSFCH resource; and determine that no PSFCH feedback is detected on all the PSFCH resources, and update a detection variable, in which the detection variable is associated with the unicast connection and configured to count a numeric count of consecutive DTX of the unicast connection.

In some embodiments of the present disclosure, when determining that no PSFCH feedback is detected on all the PSFCH resources and updating the detection variable, the processing module 1010 is configured to determine that no PSFCH feedback is detected on all the PSFCH resources, and update the detection variable according to at least one measurement result; or determine that no PSFCH feedback is detected on all the PSFCH resources, and update the detection variable directly.

In some embodiments of the present disclosure, when updating the detection variable according to the at least one measurement result, the processing module 1010 may be configured to determine that the at least one measurement result is greater than or equal to a respective threshold value, and keep the detection variable unchanged.

In some embodiments of the present disclosure, when updating the detection variable according to the at least one measurement result, the processing module 1010 may be configured to determine that at least one measurement result is less than or equal to a respective threshold value, and add 1 to the detection variable.

In some embodiments of the present disclosure, the processing module 1010 may be further configured to determine a respective threshold value corresponding to the at least one measurement result according to configuration information.

In some embodiments of the present disclosure, as shown in Fig. 10, the processing apparatus 1000 for the sidelink radio link failure further includes a receiving module 1020. The receiving module 1020 is configured to receive a dedicated radio resource control (RRC) signaling transmitted by a network device, and the dedicated RRC signaling is configured to configure the configuration information; or the receiving module 1020 is further configured to receive a system information block (SIB) signaling transmitted by a network device, and the SIB signaling is configured to configure the configuration information; or the processing module 1010 is further configured to determine the configuration information according to pre-configuration.

In some embodiments of the present disclosure, the at least one measurement result includes at least one of a received signal strength indication (RSSI) measurement result, a first channel occupancy (CO) measurement result, and a second channel busy ratio (CBR) measurement result. A CO is a channel occupancy of an unlicensed spectrum and a CBR is a channel busy ratio of a sidelink.

In some embodiments of the present disclosure, when updating the detection variable directly, the processing module 1010 is further configured to directly add 1 to the detection variable.

Fig. 11 is a schematic diagram of a processing apparatus 1100 for a sidelink radio link failure provided by an embodiment of the present disclosure.

As shown in Fig. 11, the processing apparatus 1100 for the sidelink radio link failure may include a processing module 1110 configured to: detect a PSFCH feedback on each PSFCH resource associated with a PSSCH, in which the PSSCH is associated with a unicast connection, and the PSSCH is associated with more than one PSFCH resource; and update a detection variable for each PSFCH resource where no PSFCH feedback is detected, in which the detection variable is associated with the unicast connection and configured to count a numeric count of consecutive DTXs of the unicast connection.

In some embodiments of the present disclosure, when updating the detection variable for each PSFCH resource where no PSFCH feedback is detected, the processing module 1110 is configured to: update the detection variable according to at least one measurement result for each PSFCH resource where no PSFCH feedback is detected; or update the detection variable directly for each PSFCH resource where no PSFCH feedback is detected.

In some embodiments of the present disclosure, when updating the detection variable according to the at least one measurement result, the processing module 1110 is configured to determine that the at least one measurement result is greater than or equal to a respective threshold value, and keep the detection variable unchanged.

In some embodiments of the present disclosure, when updating the detection variable according to the at least one measurement result, the processing module 1110 is configured to determine that the at least one measurement result is less than or equal to a respective threshold value, and add 1 to the detection variable.

In some embodiments of the present disclosure, the processing module 1110 is further configured to determine a respective threshold value corresponding to the at least one measurement result according to configuration information.

In some embodiments of the present disclosure, as shown in Fig. 11, the processing apparatus 1100 for the sidelink radio link failure further includes a receiving module 1120. The receiving module 1120 is configured to receive a dedicated radio resource control (RRC) signaling transmitted by a network device, and the dedicated RRC signaling is configured to configure the configuration information; or the receiving module 1120 is configured to receive a system information block (SIB) signaling transmitted by a network device, and the SIB signaling is configured to configure the configuration information; or the processing module 1110 is further configured to determine the configuration information according to pre-configuration.

In some embodiments of the present disclosure, the at least one measurement result includes at least one of a received signal strength indication (RSSI) measurement result, a first channel occupancy (CO) measurement result, and a second channel busy ratio (CBR) measurement result. A CO is a channel occupancy of an unlicensed spectrum and a CBR is a channel busy ratio of a sidelink.

In some embodiments of the present disclosure, when updating the detection variable directly, the processing module 1110 is further configured to directly add 1 to the detection variable.

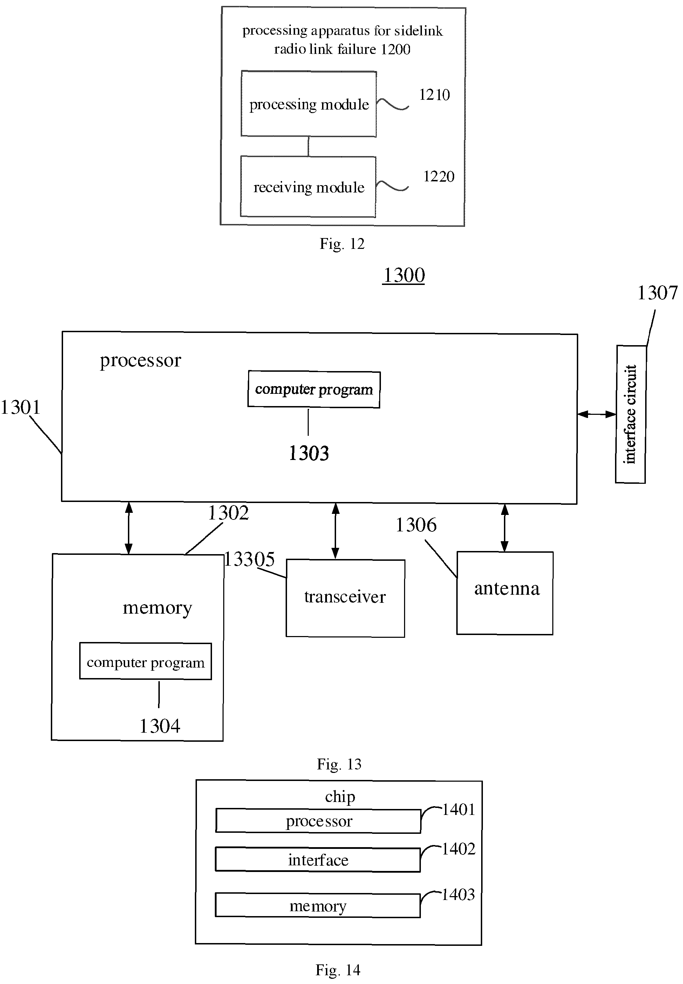

Fig. 12 is a schematic diagram of a processing apparatus 1100 for a sidelink radio link failure according to an embodiment of the present disclosure.

As shown in Fig. 12, a processing apparatus 1100 for a sidelink radio link failure may include a processing module 1210 configured to: detect a PSFCH feedback on only one PSFCH resource associated with a PSSCH, in which the PSSCH is associated with a unicast connection; and determine that no PSFCH feedback is detected on the one PSFCH resource, and update a detection variable, in which the detection variable is associated with the unicast connection and configured to count a numeric count of consecutive DTXs of the unicast connection.

In some embodiments of the present disclosure, when determining that no PSFCH feedback is detected on the one PSFCH resource and updating the detection variable, the processing module 1210 is configured to: determine that no PSFCH feedback is detected on the one PSFCH resource and update the detection variable according to at least one measurement result; or determine that no PSFCH feedback is detected on the one PSFCH resource, and update the detection variable directly.

In some embodiments of the present disclosure, when updating the detection variable according to the at least one measurement result, the processing module 1210 is configured to determine that the at least one measurement result is greater than or equal to a respective threshold value, and keep the detection variable unchanged.

In some embodiments of the present disclosure, when updating the detection variable according to the at least one measurement result, the processing module 1210 is further configured to determine that the at least one measurement result is less than or equal to a respective threshold value, and add 1 to the detection variable.

In some embodiments of the present disclosure, the processing module 1210 is further configured to determine a respective threshold value corresponding the at least one measurement result according to configuration information.

In some embodiments of the present disclosure, as shown in Fig. 12, the processing apparatus 1200 for the sidelink radio link failure further includes a receiving module 1220. The receiving module 1220 is configured to receive a dedicated radio resource control (RRC) signaling transmitted by a network device, and the dedicated RRC signaling is configured to configure the configuration information; or the receiving module 1220 is further configured to receive a system information block (SIB) signaling transmitted by a network device, and the SIB signaling is configured to configure the configuration information; or the processing module 1210 is further configured to determine the configuration information according to pre-configuration.

In some embodiments of the present disclosure, the at least one measurement result includes at least one of a received signal strength indication (RSSI) measurement result, a first channel occupancy (CO) measurement result, and a second channel busy ratio (CBR) measurement result. A CO is a channel occupancy of an unlicensed spectrum and a CBR is a channel busy ratio of a sidelink.

In some embodiments of the present disclosure, when updating the detection variable directly, the processing module 1210 is further configured to directly add 1 to the detection variable.

Referring to Fig. 13, Fig. 13 is a schematic diagram of a communication device 1300 according to an embodiment of the present disclosure. The communication device 1300 may be a network device, user equipment, a chip, chip system, or processor that supports the network device to realize the above methods, or a chip, chip system, or processor that supports the user equipment to realize the above method. The device may be used to realize the methods described in the above method embodiments, and for details, reference may be made to the descriptions in the above method embodiments.

The communication device 1300 may include one or more processors 1301. The processor 1301 may be a general-purpose processor or a special-purpose processor or the like. For example, a baseband processor or a central processor. The baseband processor may be used to process communication protocols and communication data, and the central processor may be used to control the communication device (such as a base station, a baseband chip, a terminal, a terminal chip, a DU or a CU, etc.), execute computer programs, and process data of computer programs.

Optionally, the communication device 1300 may further include one or more memories 1302, on which a computer program 1304 may be stored, and the processor 1301 executes the computer program 1304, so that the communication device 1300 may execute the methods described in the above method embodiments. Optionally, data may also be stored in the memory 1302. The communication device 1300 and the memory 1302 may be arranged separately or integrated together.

Optionally, the communication device 1300 may further include a transceiver 1305 and an antenna 1306. The transceiver 1305 may be called a transceiving unit, a transceiving machine, a transceiving circuit, etc., and is used to realize a transceiving function. The transceiver 1305 may include a receiver and a transmitter, the receiver may be called a receiving machine or a receiving circuit, etc., for realizing a receiving function, and the transmitter may be called a transmitting machine or a transmitting circuit, etc., and is used to realize a transmitting function.

Optionally, the communication device 1300 may further include one or more interface circuits 1307. The interface circuit 1307 is used to receive code instructions and transmit them to the processor 1301. The processor 1301 executes the code instructions to cause the communication device 1300 to perform the methods described in the above method embodiments.

In an implementation, the processor 1301 may include a transceiver for receiving and transmitting functions. For example, the transceiver may be a transceiving circuit, or an interface, or an interface circuit. The transceiving circuits, the interfaces or the interface circuits for receiving and transmitting functions may be separated or integrated. The transceiving circuit, the interface or the interface circuit may be used for reading and writing codes/data, or the transceiver circuit, the interface or the interface circuit may be used for signal transmission or transfer.

In an implementation, the processor 1301 may store a computer program 1303, and the computer program 1303 runs on the processor 1301, to cause the communication device 1300 to execute the methods described in the above method embodiments. The computer program 1303 may be embedded in the processor 1301, in which case, the processor 1301 may be implemented by hardware.

In an implementation, the communication device 1300 may include a circuit, which may realize the function of transmitting or receiving or communicating in the aforementioned method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by various IC process technologies, such as complementary metal oxide semiconductor (CMOS), negative channel metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or user equipment, but the scope of the communication device described in the present disclosure is not limited to this, and the structure of the communication device may not be limited by Fig. 13. The communication device may be a stand-alone device or may be part of a large device. For example, the communication device may be:
(1) an independent integrated circuit IC, or a chip, or a chip system or subsystem;
(2) a set of one or more ICs, optionally, the IC set may also include storage components for storing data and computer programs;
(3) an ASIC, such as a modem;
(4) modules that may be embedded in other devices;
(5) a receiver, a terminal, an intelligent terminal, a cellular phone, a wireless device, a handset, a mobile unit, a vehicle-mounted device, a network device, a cloud device, an artificial intelligence device, etc.
(6) others and so on.

For the case that the communication device may be a chip or a chip system, reference may be made to a schematic diagram of a chip shown in Fig. 14. The chip shown in Fig. 14 includes a processor 1401 and an interface 1402. One or more processors 1401 may be provided, and multiple interfaces 1402 may be provided.

Optionally, the chip further includes a memory 1403 for storing necessary computer programs and data.

Those skilled in the art may also understand that various illustrative logical block and step listed in the embodiments of the present disclosure may be implemented by electronic hardware, computer software, or a combination of both. Whether this function is realized by hardware or software depends on the specific application and the design requirements of the whole system. Those skilled in the art may use various methods to realize the functions for each specific application, but this realization should not be understood to be beyond the scope of protection of the embodiments of the present disclosure.

The present disclosure also provides a readable storage medium, on which instructions are stored, which, when executed by a computer, realize the functions of any of the above method embodiments.

The present disclosure also provides a computer program product which, when executed by a computer, realizes the functions of any of the above method embodiments.

The above embodiments may be realized in whole or in part by software, hardware, firmware or any combination thereof. When implemented by software, it may be in whole or in part implemented in the form of a computer program product. The computer program product includes one or more computer programs. When the computer program is loaded and executed on a computer, the flows or functions according to the embodiments of the present disclosure are generated in whole or in part. The computer may be a general-purpose computer, a special-purpose computer, a computer network, or other programmable devices. The computer program may be stored in a computer-readable storage medium or transmitted from one computer-readable storage medium to another. For example, a computer program may be transmitted from a website, computer, server or data center to another website, computer, server or data in a wired (such as a coaxial cable, an optical fiber, a digital subscriber line (DSL)) or wireless (such as infrared, wireless, microwave, etc.) manner. The computer-readable storage medium may be any available medium that the computer may access or a data storage device such as a server and a data center that contain one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

The present disclosure provides a processing method for a sidelink radio link failure, which may solve the problem of continuously failing to detect the PSFCH feedback due to the influence of LBT in a sidelink-U scenario, and thus frequently triggering the sidelink radio link failure, which affects the communication quality.

Based on the present disclosure, an example of a specific scheme is as follows.
1. UE detects no PSFCH feedback on all PSFCH resources associated with a PSSCH, and the UE determines whether to add 1 to a consecutive DTX detection variable corresponding to a unicast connection according to RSSI and/or CO and/or CBR measurement results.

As an optional embodiment, the UE maintains one consecutive DTX detection variable (numConsecutiveDTX) for each unicast connection, which is used to count a numeric count of consecutive DTXs for this unicast connection. The PSSCH is associated with only one PSFCH resource, and the UE detects whether the PSFCH feedback exists at the opportunity of the associated PSFCH resource. The PSSCH is associated with a plurality of PSFCH resources, and the UE detects whether the PSFCH feedback exists at the opportunities of all the PSFCH resources associated with the PSSCH. The channel occupancy (CO) is the channel occupancy of the unlicensed spectrum, and the channel busy ratio (CBR) is the channel busy ratio of the sidelink.

2. Based on item 1, the UE determines that the RSSI and/or CO and/or CBR measurements are greater than or equal to the respective preset threshold values. When the UE detects no PSFCH feedback on all the PSFCH resources associated with the PSSCH, it does not add 1 to the consecutive DTX detection variable corresponding to the unicast connection. The preset threshold values include a first threshold value and/or a second threshold value and/or a third threshold value.

As an optional embodiment, the preset threshold value may be configured or preconfigured by a network device. The UE in the network connection coverage may obtain the preset threshold value through a dedicated RRC signaling or a SIB signaling, and the UE out of the network connection coverage may obtain the preset threshold value through pre-configuration.

As an optional embodiment, the UE measures the RSSI according to the measurement configuration from the network side, and obtains the RSSI measurement result, and the RSSI measurement result is greater than or equal to the first threshold value (indicating that there are many UEs transmitting signals around, and the probability of the LBT failure is high), or the UE measures the CO according to the CO measurement configuration from the network side, and obtains the CO measurement result, and the CO measurement result is greater than or equal to the second threshold value (indicating that there are many UEs transmitting signals around, and the probability of the LBT failure is high), or the UE measures the CBR according to the CBR measurement from the network side, and obtains the CBR measurement result, and the CBR measurement result is greater than or equal to the third threshold value (indicating that there are many UEs transmitting signals around, and the probability of the LBT failure is high). Thus, when the UE detects no PSFCH feedback on all the PSFCH resources associated with the PSSCH, the UE does not add 1 to the consecutive DTX detection variable corresponding to the unicast connection. Optionally, the UE may reset the consecutive DTX detection variable corresponding to the unicast connection to 0, or keep the current value of the consecutive DTX detection variable corresponding to the unicast connection unchanged, without resetting the consecutive DTX detection variable corresponding to the unicast connection to 0.

As an optional embodiment, any two combinations or three indicators of the RSSI/CO/CBR are greater than or equal to their respective threshold values, and when the UE detects no PSFCH feedback on all the PSFCH resources associated with the PSSCH, the UE does not add 1 to the consecutive DTX detection variable corresponding to the unicast connection. Optionally, the UE may reset the consecutive DTX detection variable corresponding to the unicast connection to 0, or keep the current value of the consecutive DTX detection variable corresponding to the unicast connection unchanged, without resetting the consecutive DTX detection variable corresponding to the unicast connection to 0.

3. Based on item 1, the UE determines that the RSSI and/or CO and/or CBR measurements are less than or equal to the respective preset threshold values, and when the UE detects no PSFCH feedback on all the PSFCH resources associated with the PSSCH, it adds 1 to the consecutive DTX detection variable corresponding to the unicast connection. The preset threshold values include a first threshold value and/or a second threshold value and/or a third threshold value.

As an optional embodiment, the UE measures the RSSI according to the measurement configuration from the network side, and obtains the RSSI measurement result, and the RSSI measurement result is less than or equal to the first threshold value, or the UE measures the CO according to the CO measurement configuration from the network side, and obtains the CO measurement result, and the CO measurement result is less than or equal to the second threshold value, or the UE measures the CBR according to the CBR measurement configuration from the network side, and obtains the CBR measurement result, and the CBR measurement result is less than or equal to the third threshold value. Thus, when the UE detects no PSFCH feedback on all the PSFCH resources associated with the PSSCH, the UE needs to add 1 to the consecutive DTX detection variable corresponding to the unicast connection.

As an optional embodiment, any two combinations or three indicators of the RSSI and/or CO and/or CBR are less than or equal to their respective threshold values, and when the UE detects no PSFCH feedback on all the PSFCH resources associated with the PSSCH, it adds 1 to the consecutive DTX detection variable corresponding to the unicast connection.

4. In parallel with items 1-3, when the UE detects no PSFCH feedback on all the PSFCH resources associated with the PSSCH, it adds 1 to the consecutive DTX detection variable corresponding to the unicast connection.

As an optional embodiment, the UE does not consider the RSSI measurement result. When one PSSCH may be associated with multiple PSFCH resources, the UE detects whether the PSFCH feedback exists at the opportunities of all the PSFCH resources associated with PSSCH. When no PSFCH feedback is detected at the opportunities of all the PSFCH resources associated with the PSSCH, the UE adds 1 to the consecutive DTX variable corresponding to the unicast connection. When the PSFCH feedback is detected at the opportunity of any PSFCH resource associated with the PSSCH, the UE resets the consecutive DTX variable corresponding to the unicast connection to 0.

To sum up, the present disclosure has the following beneficial technical effects: the present disclosure provides the processing method for the sidelink radio link failure, which may distinguish the update of the consecutive DTX detection variable from the LBT failure, thus effectively alleviating the problem of triggering the sidelink radio link failure due to the LBT failure.

The above examples may be applied to all the methods, apparatuses, devices, storage media, systems and other embodiments described in the present disclosure, and will not be repeated here.

It may be understood by those skilled in the art that the numerical numbers such as first and second involved in the present disclosure are only for the convenience of description, and are not used to limit the scope of the embodiments of the present disclosure, and also not used to indicate the sequence.

The term "at least one" in the present disclosure may also be described as one or more, and the term "a plurality of" may be two, three, four or more, which is not limited in the present disclosure. In the embodiments of the present disclosure, for a technical feature, detailed technical features of this technical feature are distinguished by terms "first", "second", "third", "A", "B", "C", and "D", etc. The technical features described by the terms "first", "second", "third", "A", "B", "C" and "D" are not in an order of precedence or in an order of size.

As used herein, the terms "machine-readable medium" and "computer-readable medium" refer to any computer program product, device, and/or apparatus (e.g., a magnetic disk, an optical disk, a memory, a programmable logic device (PLD)) for providing machine instructions and/or data to a programmable processor, including machine-readable media that receive machine instructions as machine-readable signals. The term "machine-readable signal" refers to any signal used to provide machine instructions and/or data to a programmable processor.

The systems and techniques described herein may be implemented in a computing system including a back-end component (e.g., as a data server), a computing system including a middleware component (e.g., an application server), or a computing system including a front-end component (e.g., a user computer with a graphical user interface or a web browser through which a user may interact with embodiments of the systems and techniques described herein), or a computing system including any combination of such back-end component, middleware component, or front-end component. Components of the system may be interconnected by any form or medium of digital data communication (for example, a communication network). Examples of the communication network include local area network (LAN), wide area network (WAN) and Internet.

A computer system may include a client and a server. The client and server are generally far away from each other and usually interact through the communication network. The relationship between the client and the server is generated by computer programs running on corresponding computers and having a client-server relationship with each other.

It should be understood that steps may be reordered, added or deleted using the various forms of flows shown above. For example, the steps described in the present disclosure may be executed in parallel, sequentially or in a different order, so long as the desired results of the technical scheme disclosed in the present disclosure may be achieved, which is not limited herein.

In addition, it should be understood that various embodiments of the present disclosure may be implemented separately or in combination with other embodiments if the scheme permits.

Those ordinary skilled in the art may realize that the units and algorithm steps of various examples described in connection with the embodiments disclosed herein may be implemented in electronic hardware, or a combination of computer software and electronic hardware. Whether these functions are implemented in hardware or software depends on the specific application and design constraints of the technical scheme. Those skilled may use different methods to realize the described functions for each specific application, but this implementation should not be considered beyond the scope of the present disclosure.

It may be clearly understood by those skilled in the art that for the convenience and conciseness of description, the specific working processes of the systems, apparatuses and units described above may refer to the corresponding processes in the aforementioned method embodiments, and will not be repeated here.

The above is only the specific implementation of the present disclosure, but the protection scope of the present disclosure is not limited to this. Any person familiar with this technical field may easily think of changes or substitutions within the technical scope disclosed in the present disclosure, which should be covered by the present disclosure. Therefore, the protection scope of the present disclosure should be based on the protection scope of the claims.

## Claims

1. A processing method for a sidelink radio link failure, performed by a terminal, comprising:
detecting a physical sidelink feedback channel (PSFCH) feedback on all PSFCH resources associated with a physical sidelink shared channel (PSSCH), wherein the PSSCH is associated with a unicast connection, and the PSSCH is associated with more than one PSFCH resource; and
determining that no PSFCH feedback is detected on all the PSFCH resources, and updating a detection variable, wherein the detection variable is associated with the unicast connection and configured to count a numeric count of consecutive discontinuous transmissions (DTXs) of the unicast connection.

2. The method according to claim 1, wherein determining that no PSFCH feedback is detected on all the PSFCH resources and updating the detection variable comprises:
determining that no PSFCH feedback is detected on all the PSFCH resources, and updating the detection variable according to at least one measurement result; or
determining that no PSFCH feedback is detected on all the PSFCH resources, and directly updating the detection variable.

3. The method according to claim 2, wherein updating the detection variable according to the at least one measurement result comprises:
determining that the at least one measurement result is greater than or equal to a respective threshold value, and keeping a current value of the detection variable unchanged.

4. The method according to claim 2, wherein updating the detection variable according to the at least one measurement result comprises:
determining that the at least one measurement result is less than or equal to a respective threshold value, and adding 1 to the detection variable.

5. The method according to claim 3 or 4, further comprising:
determining the respective threshold value corresponding to the at least one measurement result according to configuration information.

6. The method according to claim 5, further comprising:
receiving a dedicated radio resource control (RRC) signaling transmitted by a network device, wherein the dedicated RRC signaling is configured to configure the configuration information; or
receiving a system information block (SIB) signaling transmitted by a network device, wherein the SIB signaling is configured to configure the configuration information; or
determining the configuration information according to pre-configuration.

7. The method according to any one of claims 2-6, wherein the at least one measurement result comprises at least one of a received signal strength indication (RSSI) measurement result, a first channel occupancy (CO) measurement result, or a second channel busy ratio (CBR) measurement result, wherein a CO is a channel occupancy of an unlicensed spectrum and a CBR is a channel busy ratio of a sidelink.

8. The method according to claim 2, wherein directly updating the detection variable comprises:
directly adding 1 to the detection variable.

9. A method processing for a sidelink radio link failure, performed by a terminal, comprising:
detecting a PSFCH feedback on each PSFCH resource associated with a PSSCH, wherein the PSSCH is associated with a unicast connection, and the PSSCH is associated with more than one PSFCH resource; and
updating a detection variable for each PSFCH resource where no PSFCH feedback is detected, wherein the detection variable is associated with the unicast connection and configured to count a numeric count of consecutive DTXs of the unicast connection.

10. The method according to claim 9, wherein updating the detection variable for each PSFCH resource where no PSFCH feedback is detected comprises:
updating the detection variable for each PSFCH resource where no PSFCH feedback is detected according to at least one measurement result; or
directly updating the detection variable for each PSFCH resource where no PSFCH feedback is detected.

11. The method according to claim 10, wherein updating the detection variable according to the at least one measurement result comprises:
determining that the at least one measurement result is greater than or equal to a respective threshold value, and keeping a current value of the detection variable unchanged.

12. The method according to claim 10, wherein updating the detection variable according to the at least one measurement result comprises:
determining that the at least one measurement result is less than or equal to a respective threshold value, and adding 1 to the detection variable.

13. The method according to claim 11 or 12, further comprising:
determining the respective threshold value corresponding to the at least one measurement result according to configuration information.

14. The method according to claim 13, further comprising:
receiving a dedicated RRC signaling transmitted by a network device, wherein the dedicated RRC signaling is configured to configure the configuration information; or
receiving a SIB signaling transmitted by a network device, wherein the SIB signaling is configured to configure the configuration information; or
determining the configuration information according to pre-configuration.

15. The method according to any one of claims 10-14, wherein the at least one measurement result comprises at least one of a RSSI measurement result, a first CO measurement result, or a second CBR measurement result, wherein a CO is a channel occupancy of an unlicensed spectrum and a CBR is a channel busy ratio of a sidelink.

16. The method according to claim 10, wherein directly updating the detection variable comprises:
directly adding 1 to the detection variable.

17. A processing method for a sidelink radio link failure, performed by a terminal, comprising:
detecting a PSFCH feedback on only one PSFCH resource associated with a PSSCH, wherein the PSSCH is associated with a unicast connection; and
determining that no PSFCH feedback is detected on the one PSFCH resource, and updating a detection variable, wherein the detection variable is associated with the unicast connection and configured to count a numeric count of consecutive DTXs of the unicast connection.

18. The method according to claim 17, wherein determining that no PSFCH feedback is detected on the one PSFCH resource and updating the detection variable comprises:
determining that no PSFCH feedback is detected on the one PSFCH resource, and updating the detection variable according to at least one measurement result; or
determining that no PSFCH feedback is detected on the one PSFCH resource, and directly updating the detection variable.

19. The method according to claim 18, wherein updating the detection variable according to the at least one measurement result comprises:
determining that the at least one measurement result is greater than or equal to a respective threshold value, and keeping a current value of the detection variable unchanged.

20. The method according to claim 18, wherein updating the detection variable according to the at least one measurement result comprises:
determining that the at least one measurement result is less than or equal to a respective threshold value, and adding 1 to the detection variable.

21. The method according to claim 19 or 20, further comprising:
determining the respective threshold value corresponding to the at least one measurement result according to configuration information.

22. The method according to claim 21, further comprising:
receiving a dedicated RRC signaling transmitted by a network device, wherein the dedicated RRC signaling is configured to configure the configuration information; or
receiving a SIB signaling transmitted by a network device, wherein the SIB signaling is configured to configure the configuration information; or
determining the configuration information according to pre-configuration.

23. The method according to any one of claims 18-22, wherein the at least one measurement result comprises at least one of a RSSI measurement result, a first CO measurement result, or a second CBR measurement result, wherein a CO is a channel occupancy of an unlicensed spectrum and a CBR is a channel busy ratio of a sidelink.

24. The method according to claim 18, wherein directly updating the detection variable comprises:
directly adding 1 to the detection variable.

25. A processing apparatus for a sidelink radio link failure, applied to a terminal, comprising a processing module configured to:
detect a PSFCH feedback on all PSFCH resources associated with a PSSCH, wherein the PSSCH is associated with a unicast connection, and the PSSCH is associated with more than one PSFCH resource; and
determine that no PSFCH feedback is detected on all the PSFCH resources, and update a detection variable, wherein the detection variable is associated with the unicast connection and configured to count a numeric count of consecutive DTXs of the unicast connection.

26. A processing apparatus for a sidelink radio link failure, applied to a terminal, comprising a processing module configured to:
detect a PSFCH feedback on each PSFCH resource associated with a PSSCH, wherein the PSSCH is associated with a unicast connection, and the PSSCH is associated with more than one PSFCH resource; and
update a detection variable for each PSFCH resource where no PSFCH feedback is detected, wherein the detection variable is associated with the unicast connection and configured to count a numeric count of consecutive DTXs of the unicast connection.

27. A processing apparatus for a sidelink radio link failure, applied to a terminal, comprising a processing module configured to:
detect a PSFCH feedback on only one PSFCH resource associated with a PSSCH, wherein the PSSCH is associated with a unicast connection; and
determine that no PSFCH feedback is detected on the one PSFCH resource, and update a detection variable, wherein the detection variable is associated with the unicast connection and configured to count a numeric count of consecutive DTXs of the unicast connection.

28. A communication device, comprising:
a transceiver;
a memory; and
a processor connected to the transceiver and the memory, respectively, and configured to control the transceiver to receive and transmit wireless signals by executing computer executable instructions on the memory, and to realize the method according to any one of claims 1-24.

29. A computer storage medium, storing computer executable instructions which, when executed by a processor, are configured to realize the method according to any one of claims 1-24.
